(19)

Europäisches
Patentamt
European
Patent Office
Office européen
des brevets

(11) **EP 2 487 568 A1**

(12) **EUROPEAN PATENT APPLICATION**
published in accordance with Art. 153(4) EPC

(43) Date of publication:
**15.08.2012 Bulletin 2012/33**

(21) Application number: **10821973.4**

(22) Date of filing: **04.10.2010**

(51) Int Cl.:
*G06F 3/048* (2006.01)     *G06F 17/30* (2006.01)

(86) International application number:
**PCT/JP2010/067384**

(87) International publication number:
**WO 2011/043303 (14.04.2011 Gazette 2011/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2009 JP 2009232662
25.03.2010 JP 2010070517**

(71) Applicant: **Sharp Kabushiki Kaisha
Osaka-shi, Osaka 545-8522 (JP)**

(72) Inventors:
• **SHIMADA, Masayuki
Osaka-shi, Osaka 545-8522 (JP)**

• **MIKI, Kazuhiro
Osaka-shi, Osaka 545-8522 (JP)**
• **TANEMURA, Yoshitaka
Osaka-shi, Osaka 545-8522 (JP)**

(74) Representative: **Treeby, Philip David William et al
R.G.C. Jenkins & Co
26 Caxton Street
London
Greater London SW1H 0RJ (GB)**

(54) **ELECTRONIC DOCUMENT PROCESSING DEVICE, ELECTRONIC DOCUMENT DISPLAY DEVICE, ELECTRONIC DOCUMENT PROCESSING METHOD, ELECTRONIC DOCUMENT PROCESSING PROGRAM, AND STORAGE MEDIUM**

(57)     An electronic document display device (100) in accordance with the present invention includes: a marker analysis section (110) for analyzing distribution of markers in an electronic document; an input receiving section (109) for receiving designation for designating a designated part of the electronic document, which designated part is designated to be displayed on a display section (111); and a display control section (107) for causing the display section (111) to display a part of the electronic document on the basis of the distribution of the markers analyzed by the marker analysis section (110), the part ranging differently from the designated part received by the input receiving section (109), so as to increase possibility of the marked places being displayed on the display section.

FIG. 1

EP 2 487 568 A1

## Description

Technical Field

The present invention relates to mainly an electronic document display device for displaying an electronic document, in particularly, an electronic document display device capable of displaying an electronic document with marker information.

Background art

Recently, more readers read computerized books (hereinafter referred to as electronic books) with the use of PCs (personal computers). Accordingly, more electronic book terminals for enabling readers to read electronic books are used. For some users accustomed to reading print media books, PCs or electronic book terminals used by the users to read electronic books are still inconvenient. However, some attempts to improve the inconvenience have been made.

For example, Patent Literature 1 discloses an information processing unit in which electronic documents are displayed in such a manner that a cursor moves slowly when it passes through a Chinese character, which has a longer phonetic length. With such a control of the moving speed of a cursor, the information processing unit of Patent Literature 1 makes it easier for a reader to follow the cursor to read a document, compared to an information processing unit in which the moving speed of a cursor is constant. Patent Literature 2 discloses a computer system in which, when a part of a document, which part had been displayed without having been scrolled for a certain time period or longer, is again displayed, the part is displayed together with sentences of before and after the part (i.e., the number of lines to be displayed is increased). Increased number of lines to be displayed will also change a relative size of a scroll knob with respect to a scroll bar. Accordingly, when a reader which reads a document with the use of the computer system of Patent Literature 2 wants to cause the computer system to display again a part of the documents where the reader has found interesting and read carefully, the reader can easily cause the computer system to display the part by utilizing the change of the size of the scroll knob as a mark.

Patent Literature 3 discloses, as a unit which enhances convenience of browsing of various contents other than electronic books, an information processing unit in which contents such as static image contents or e-mail contents are displayed in such a manner that more interesting contents for a reader are displayed for a longer time period.

In addition, some programs for browsing electronic books have a marker function whereby a user can add markers to interesting parts. The marker function achieves a so-called sticky note function in a case of print media books. Some of programs having such a marker function also include a jumping function. The jumping function is a function to jump to a marked place in an electronic book when a reader selects the marker displayed with the electronic book. Such functions provide convenience unique to electronic books.

Citation List

Patent Literature

Patent Literature 1
Japanese Patent Application Publication, Tokukaihei No. 08-249124 A (Publication Date: September 27, 1996)
Patent Literature 2
Japanese Patent Application Publication, Tokukaihei No. 07-44352 A (Publication Date: February 14, 1995)
Patent Literature 3
Japanese Patent Application Publication, Tokukai No. 2008-46869 A (Publication Date: February 28, 2008)

Summary of invention

Technical Problem

Of the conventional configurations, a configuration without a marker function cannot reduce the burden which may be caused when a reader carefully reads important parts after a skimming or one time browsing of a document.

Although an electronic book terminal or a program having a marker function can enable a reader to carefully read only important parts with the use of a jumping function using markers, after one time reading, it may trouble a reader when the reader skims an entire electronic book but intensively read marked places of the book at once. It is because, while a reader reads a place with many markers, a displayed part may be jumped to another marker which has already been displayed, or a reader may accidentally miss a marker located isolated after performing repeatedly jumping operations and can only find such a marker with difficulties.

Even when a place is already displayed, to which a marker to be subsequently selected is added, a reader may accidently select another marker located after the marker. This unnecessary jumping process may disadvantageously cause wasting of processing time.

The present invention has been accomplished in view of the above-mentioned problems and one major object of the present invention is to provide an electronic document processing device which enables a reader to read documents efficiently without performing wastefully repeated jumping processes when the reader skims the entire document but intensively reads important parts of the document at once.

Solution to Problem

In order to solve the above-mentioned problems, the electronic document processing device in accordance with the present invention is an electronic document processing device including: a marker analysis means for analyzing distribution of marked places in an electronic document to which markers are added; a receiving means for receiving designation for designating a designated part of the electronic document, which designated part is designated to be displayed on a display section; and a display control means for causing the display section to display a part of the electronic document on the basis of the distribution of the marked places analyzed by the marker analysis means, the part ranging differently from the designated part, so as to increase possibility of the marked places being displayed on the display section.

According to the above configuration, the electronic document processing device causes the display section to display a part of the electronic document on the basis of the distribution of marked places analyzed by the marker analysis means, the part ranging differently from the designated part, so as to increase possibility of the marked places being displayed on the display section. In this context, the marker is to be added to an important part of the electronic document.

Accordingly, the electronic document processing device makes it possible to reduce frequency of troubles in which a reader, when skimming a document, misses an important part with many markers and has to find the part afterward.

Therefore, the electronic document processing device advantageously enables a reader to read a document efficiently without performing wastefully repeated jumping processes, when the reader skims the entire document but intensively read an important part of the document at once.

In order to solve the problems, the electronic document processing method in accordance with the present invention is an electronic document processing method including the steps of: analyzing distribution of marked places in an electronic document to which markers are added; receiving designation for designating a designated part of the electronic document, which designated part is designated to be displayed on a display section; and performing display control to cause the display section to display a part of the electronic document on the basis of the distribution of the marked places analyzed by the step of analyzing the distribution of the marked places, the part ranging differently from the designated part, so as to increase possibility of the marked places being displayed on the display section.

According to the above configuration, the electronic document processing method has the same effect as that of the electronic document processing device in accordance with the present invention.

Advantageous Effects of Invention

As described above, the electronic document processing device in accordance with the present invention advantageously enables a reader to read a document efficiently without performing wastefully repeated jumping processes, when the reader skim the entire document but intensively reads an important part of the document at once.

Brief Description of Drawings

Fig. 1

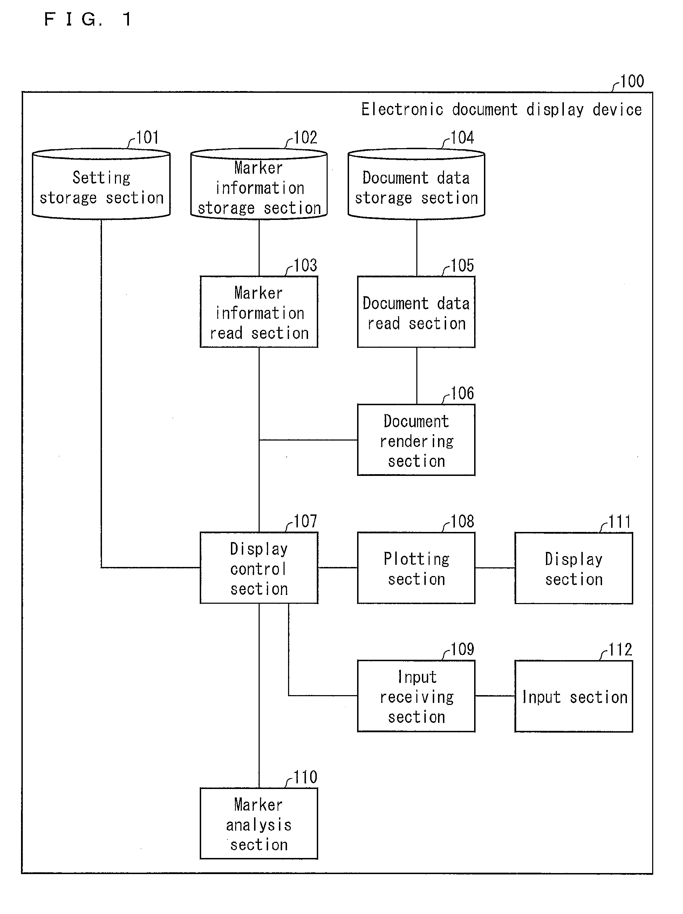

Fig. 1 is a block diagram illustrating main components of an electronic document display device in accordance with Embodiment 1.
Fig. 2

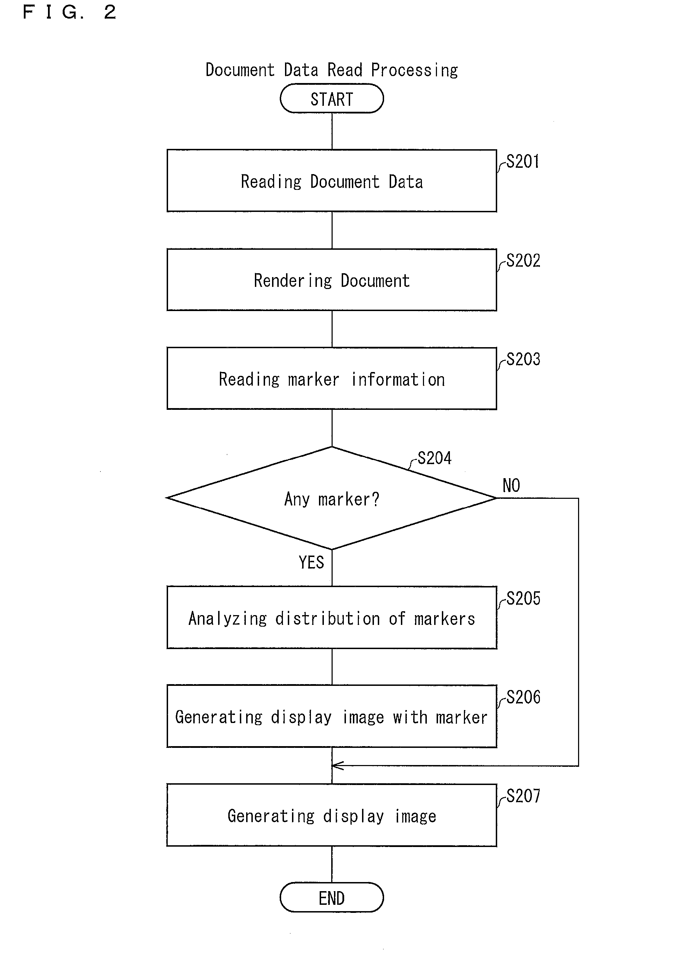

Fig. 2 is a flowchart illustrating an operation for reading document data.
Fig. 3

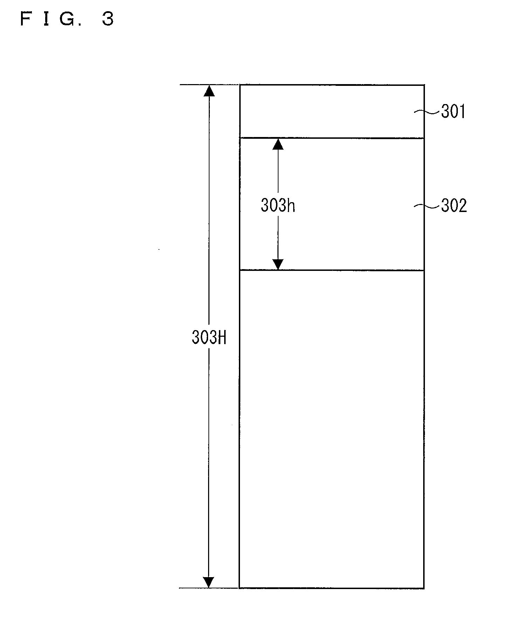

Fig. 3 illustrates schematically a relation between an entire electronic document image and a part of the electronic document image which part is to be displayed on a display section.

Fig. 4

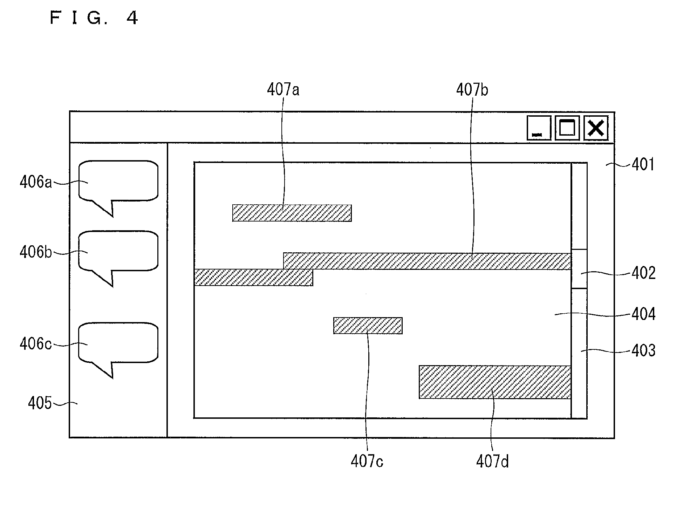

Fig. 4 is a diagram illustrating a display image displayed on the entire display section.

Fig. 5

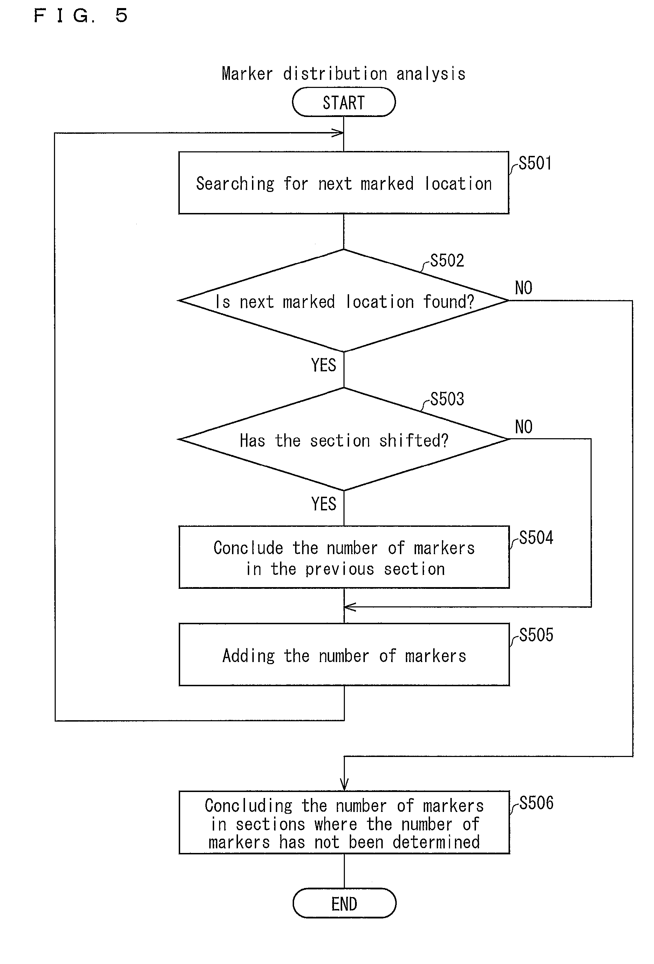

Fig. 5 is a flowchart illustrating a flow of a marker distribution analysis processing of the electronic document display device in accordance with Embodiment 1.

Fig. 6

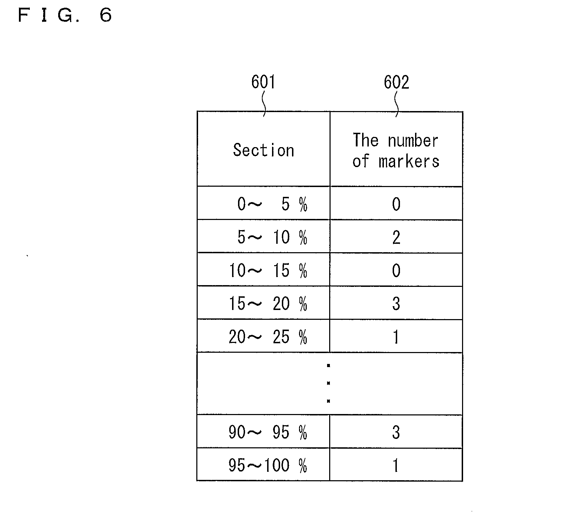

Fig. 6 illustrates the number of markers included in each section of an electronic document of Embodiment 1, the numbers of markers being obtained by the distribution analysis processing in accordance with the flowchart of Fig. 5.

Fig. 7

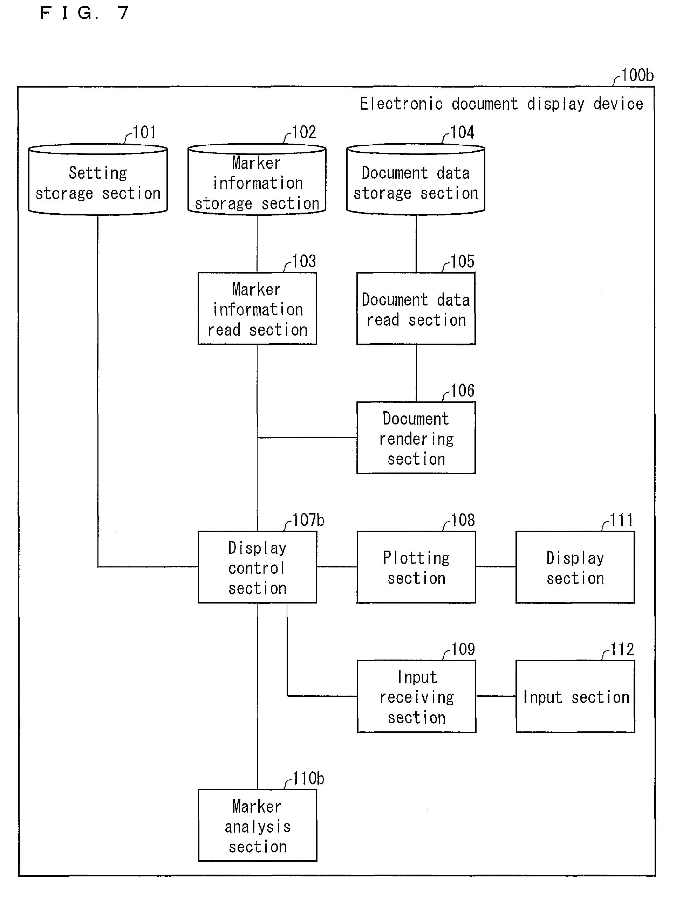

Fig. 7 is a block diagram illustrating main components of an electronic document display device in accordance with Embodiment 2.

Fig. 8

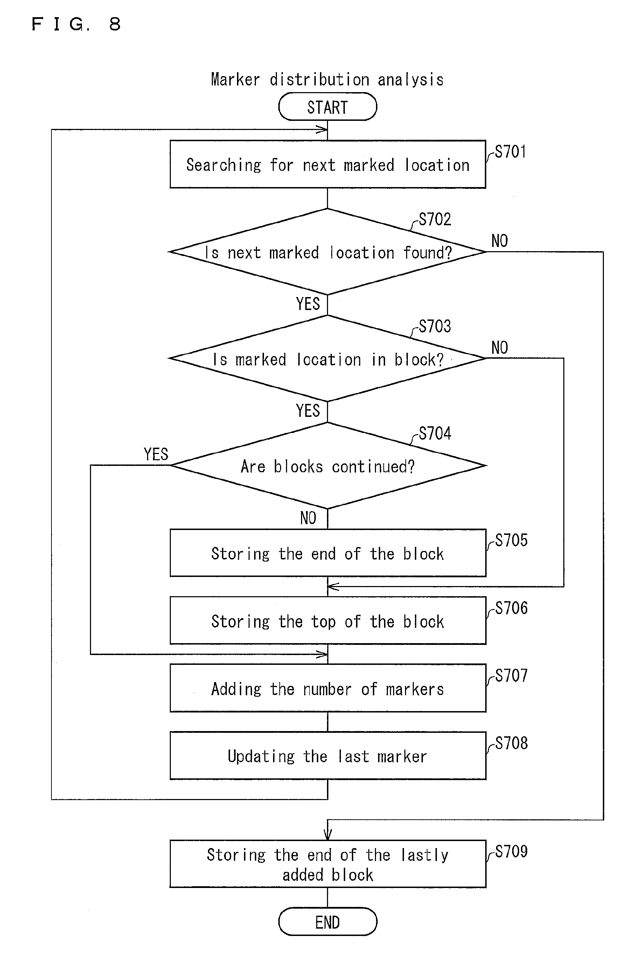

Fig. 8 is a flowchart illustrating a flow of a marker distribution analysis processing of the electronic document display device in accordance with Embodiment 2.

Fig. 9

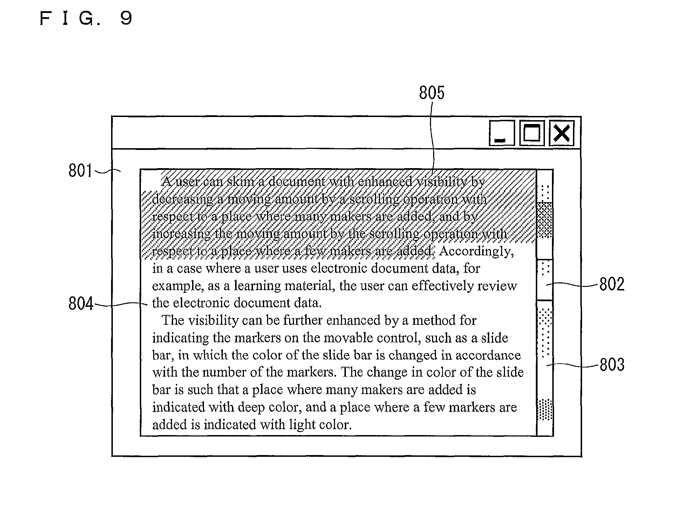

Fig. 9 is another diagram of Embodiment 1 illustrating a display image displayed on an entire display section.

Fig. 10

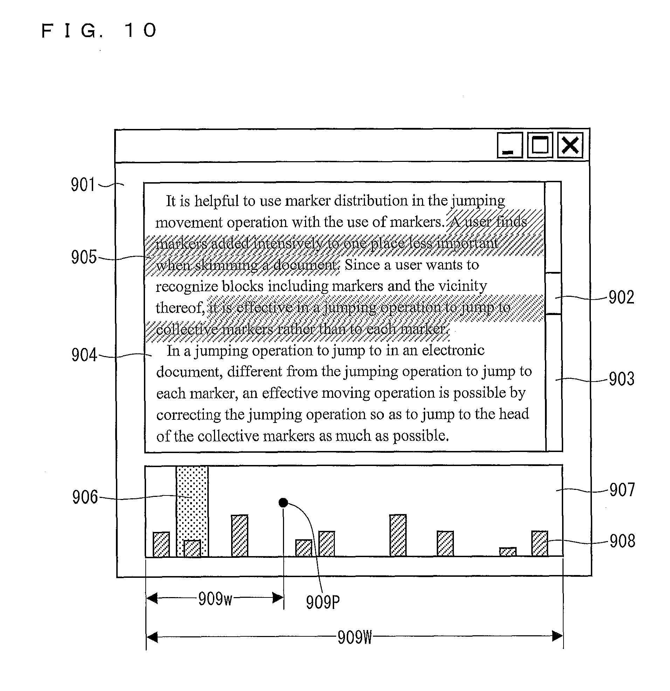

Fig. 10 is another diagram of Embodiment 2 illustrating a display image displayed on an entire display section.

Fig. 11

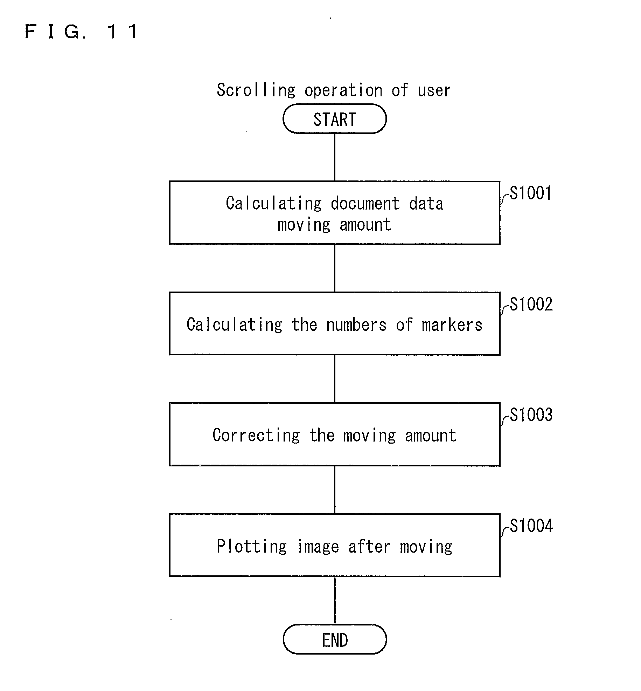

Fig. 11 is a flowchart illustrating a flow of a processing in which the electronic document display device of Embodiment 1 controls a scroll amount of the electronic document.

Fig. 12

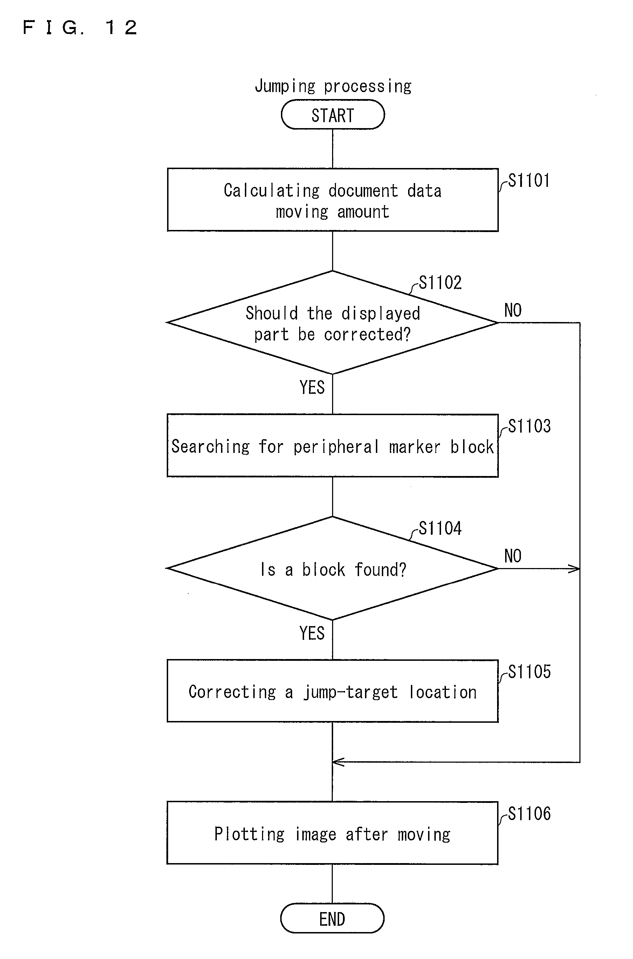

Fig. 12 is a flowchart illustrating a flow of a processing in which the electronic document display device of Embodiment 2 controls a part to be displayed of the electronic document.

Fig. 13

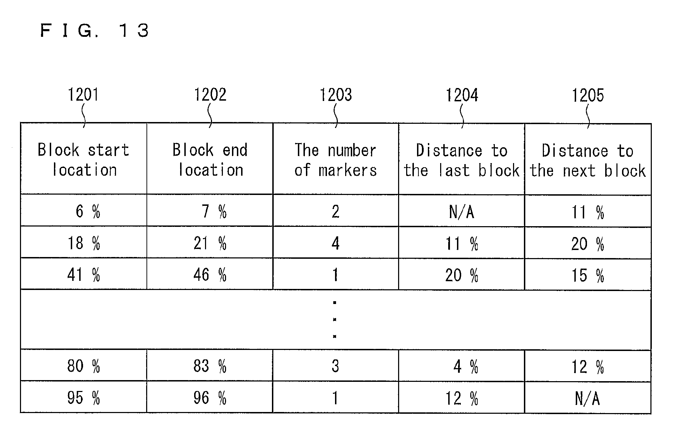

Fig. 13 illustrates the number of markers included in each block of the electronic document of Embodiment 2, the number of markers being obtained by the distribution analysis processing in accordance with the flowchart of Fig. 8.

Fig. 14

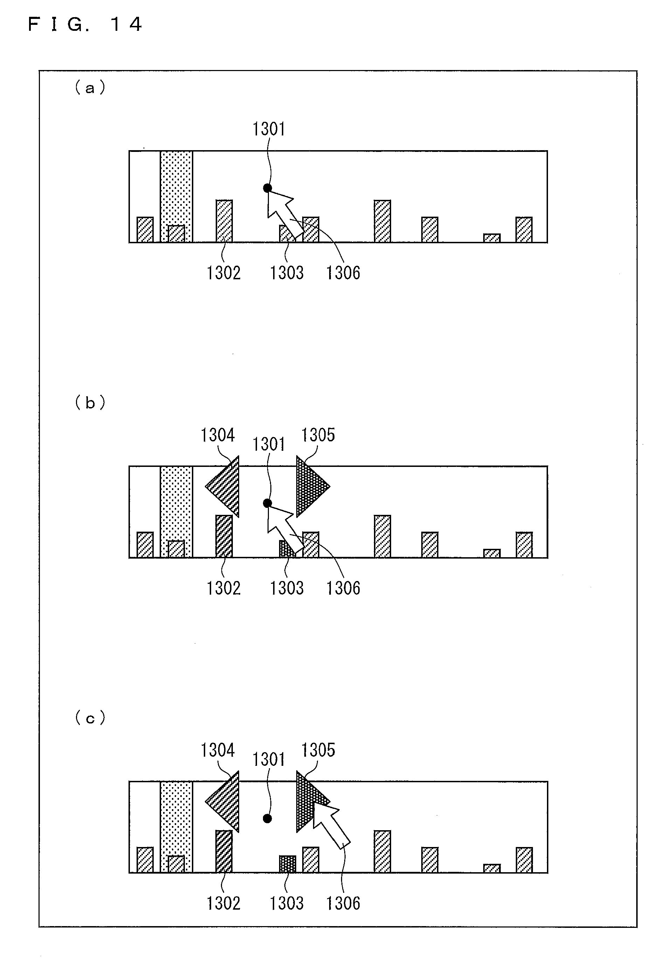

Fig. 14 illustrates a UI in a block display region 907 in Embodiment 2 for making a reader select a jump-target block. (a) through (c) of Fig. 14 indicate how the UI changes while a reader operates to select the block.

Fig. 15

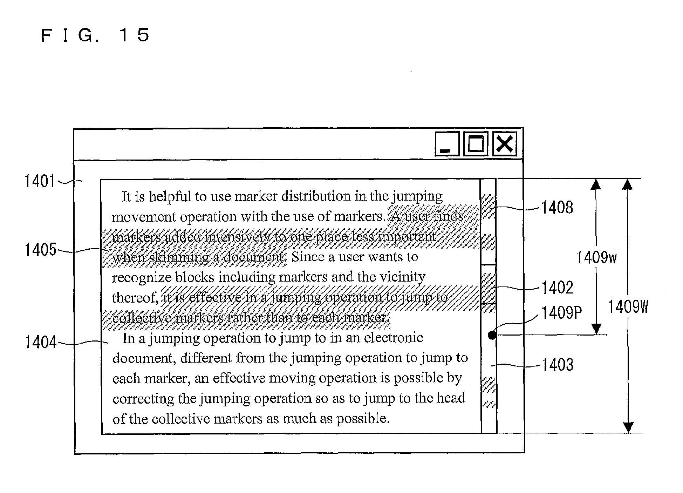

Fig. 15 is another diagram of Embodiment 2 illustrating a display image displayed on an entire display section.

Fig. 16

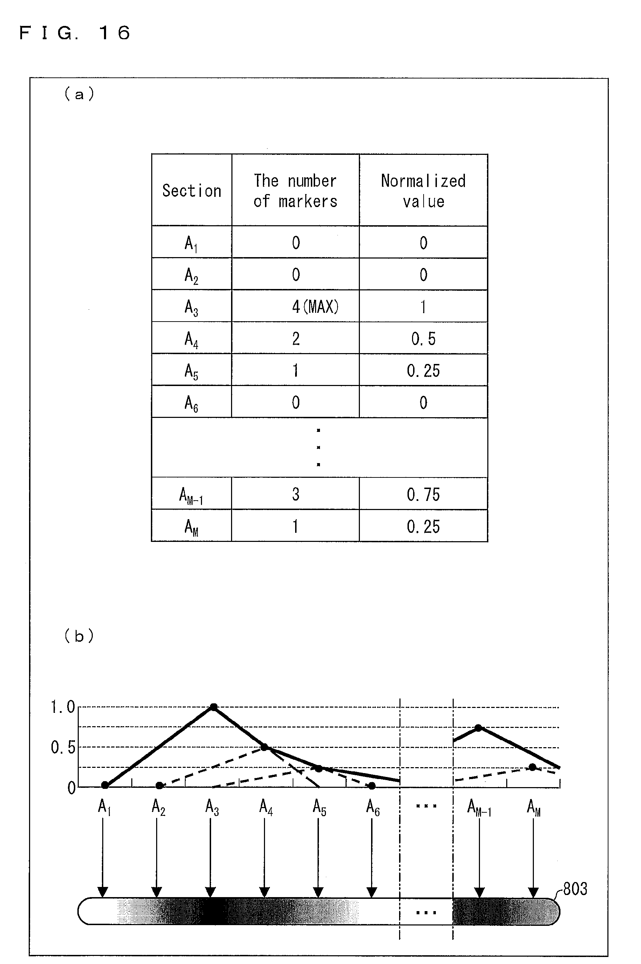

Fig. 16 illustrates a relation of the number of markers included in each section of the electronic document and color density in a scroll bar in Embodiment 1. (a) of Fig. 16 is a table illustrating the number of markers included in each section of the electronic document and normalized values thereof, and (b) of Fig. 16 is a graph illustrating color densities in regions which correspond to the respective sections in the scroll bar.

Fig. 17

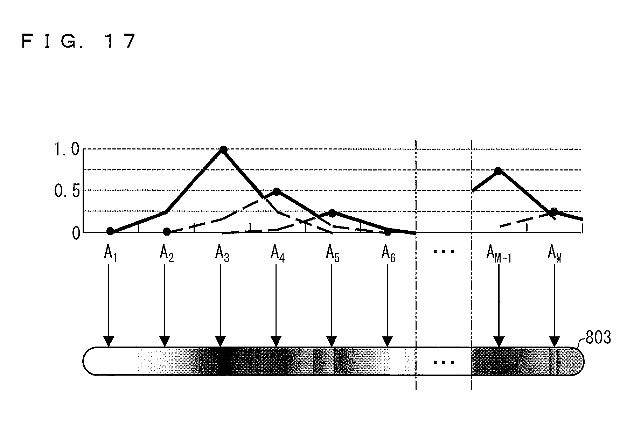

Fig. 17 illustrates another graph illustrating color densities in the regions which correspond to the respective sections in the scroll bar of Embodiment 1, when the respective sections of the electronic document includes the numbers of markers indicated in (a) of Fig. 16.

Description of Embodiments

[Embodiment 1]

A configuration and an operation of an electronic document display device in accordance with Embodiment 1 of the present invention will be described below with reference to Figs. 1 through 6, 9, 11, and 16. The electronic document display device in accordance with Embodiment 1 is an electronic document display device for controlling scrolling speed of an electronic document, when a part of the electronic document which part has many markers is scrolled, with the use of a scroll amount controlling function for reducing a scrolled amount of the electronic document scrolled by a scroll knob.

<A Configuration of the Electronic Document Display Device 100>

The following will discuss the configuration of the electronic document display device in accordance with Embodiment 1 with reference to Figs. 1 and 4. Fig. 1 is a block diagram illustrating main components of the electronic document display device 100. Fig. 4 is a diagram illustrating a window 401 of an application for displaying an electronic document, the window 401 being to be displayed on a display section 111 of the electronic document display device 100.

As illustrated in Fig. 1, the electronic document display device 100 includes a setting storage section 101, a marker information storage section 102, a marker information read section 103, a document data storage section 104, a document data read section 105, a document rendering section 106, a display control section 107, a plotting section 108, an input receiving section 109, a marker analysis section 110, a display section 111, and a input section 112.

The following will explain each member included in the electronic document display device 100.

(Setting Storage Section 101)

The setting storage section 101 is a storage section for storing setting information therein. The setting information is information on sectioning of an electronic document, which will be described later.

(Marker Information Storage Section 102)

The marker information storage section 102 is a storage section in which information on markers added to an electronic document (marker information) and information on the designation of the electronic document to which the markers are added are stored in association with each other.

(Marker Information Read Section 103)

Upon receiving instruction from a display control section 107, the marker information read section 103 reads from the marker information storage section 102 marker information stored in association with the electronic document to be displayed, and generates a list (hereinafter referred to as "a marker list") including pairs of locations where markers are added (marked locations) in the electronic document and comments belonging to the markers.

(Document Data Storage Section 104)

The document data storage section 104 is a storage section in which document data of the electronic document to be displayed on the display section 111 is stored.

(Document Data Read Section 105)

The document data read section 105 reads the document data from the document data storage section 104 and supplies a document rendering section 106 with the document data.

(Document Rendering Section 106)

The document rendering section 106 interprets the document data and generates an electronic document image in an aspect in which no marker is added.

(Display Control Section 107)

The display control section 107 generates an image of the window 401 to be displayed on the display section 111. The display control section 107 also generates an electronic document image in an aspect in which a marker is added, on the basis of the marker list made by the marker information read section 103 and the electronic document image generated by the document rendering section 106. The display control section 107 then generates a display image to be displayed on an entire screen of the display section 111, with the use of the image of the window 401 and the electronic document image.

(Plotting Section 108)

On the basis of the image of the window 401 generated by the display control section 107 and the electronic document image, the plotting section 108 displays the window 401 on the display section 111, and an electronic document to which markers are added on a rendering result display region 404 of the window 401.

(Input Receiving Section 109)

The input receiving section 109 receives information inputted from the input section 112 and supplies the display control section 107 with the received information.

(Marker Analysis Section 110)

The marker analysis section 110 (i) analyzes, upon receiving an instruction from the display control section 107, distribution of markers included in the electronic document on the basis of the setting information stored in the setting storage section 101 and the marker list generated by the marker information read section 103, and (ii) generates marker distribution data, which will be described later.

(Display Section 111)

The display section 111 is a display device on which the electronic document is displayed.

(Input Section 112)

The input section 112 is an input device such as a mouse or a keyboard.

<Processing Operation of the Electronic Document Display Device 100>

The following will discuss the processing operation of the electronic document display device 100 with reference to Figs. 2 through 6, 9, and 11. Of the processing operations of the electronic document display device 100, a document data read operation will first be described, and then a scroll operation, which is a feature of the present invention, will be described in detail.

(Document Data Read Operation)

The document data read operation will be described below with reference to Figs. 2 through 4. Fig. 2 is a flowchart illustrating a document data read operation. And, Fig. 3 illustrates schematically a relation between an entire electronic document image and a part of the electronic document image which part is to be displayed on the display section 111.

When the display control section 107 receives via the input receiving section 109 an instruction from the input section 112 to display an electronic document, the document data read section 105 reads, in S201, document data of the electronic document from the document data storage section 104, and supplies the document rendering section 106 with the read document data. Document data may be encrypted in order to be protected from unfair use. In a case where the document data is encrypted, in S201, the document data read section 105 supplies the document rendering section 106 with the document data which has been read out and decrypted.

In S202, the document rendering section 106 interprets and performs a rendering of the document data supplied from the document data read section 105 to generate an electronic document image to be displayed on the display section 111.

In S203, the marker information read section 103 receives an instruction from the display control section 107 and reads marker information stored in association with the electronic document to be displayed, so as to generate a marker list. In case of absent of the marker information stored in association with the electronic document, the marker information read section 103 generates an empty list as a marker list.

When the marker list is not an empty list, that is, in a case where there exists the marker information stored in association with the electronic document to be displayed (Yes in S204), the marker analysis section 110 receives an instruction from the display control section 107 and analyzes distribution of markers (the distribution analysis will be described in detail later) in S205. Then, in S206, the display control section 107 generates, on the basis of the results of the distribution analysis performed by the marker analysis section 110 and the electronic document image generated by the document rendering section 106 in S202, the electronic document image in an aspect in which a marker is added. Then, the processing goes to S207. On the contrary, in a case where the marker list is an empty list, that is, in case of absent of the marker information stored in association with the electronic document (No in S204), the processing goes to S207.

In S207, the display control section 107 generates a display image in which the finally generated electronic document image, the window 401, a scroll knob 402, and a scroll bar (a movable region of the scroll knob) 403 included in the window 401 are combined. The finally generated electronic document image is the electronic document image generated by the image display control section 107 when the marker information exists, or the electronic document image generated by the document rendering section 106 when the marker information does not exist.

The electronic document image generated in S202 may be an electronic document image 301 of the entire document data, or an electronic document image 302 which corresponds to an area to be displayed on the rendering result display region 404. In a case where the electronic document image which corresponds to an area to be displayed on the rendering result display region 404 is generated in S202, once the processing from S201 to S206 is performed, a moving amount correction processing, which refers to the results of the distribution analysis in S205, will be performed every time the electronic document is scrolled, and an electronic document image for the corrected scroll-target will be generated. The moving amount correction processing will be described later.

Thus, the operation for reading the document data in the electronic document display device 100 has been described. The following will describe the examples of the display image to be displayed on the display section 111 with reference to Figs. 3 and 4.

(Display Image to be Displayed on the Display Section 111)

As illustrated in Fig. 4, the window 401 of an application for displaying an electronic document is displayed on the display section 111 as a display image.

The window 401 includes the rendering result display region 404, on which an electronic document image is displayed. The electronic document image to be displayed is a part of the entire electronic document image generated. For example, as illustrated in Fig. 3, a part 302 of the entire electronic document image 301 is displayed.

The window 401 also includes the scroll knob 402 and the scroll bar 403, whereby a reader can view the approximate number of lines of the entire electronic document image or a relative location of the displayed part with respect to the entire electronic document image. For example, on the premise that the number of lines of the displayed part is 303h and the number of lines of the entire electronic document is 303H as illustrated in Fig. 3, the greater the ratio of 303h to 303H is, the longer the scroll knob 402 is. Also, the closer the currently displayed part to a beginning part of the entire electronic document image is, the closer the top end of the scroll knob 402 to the top end of the scroll bar 403 is, and the closer the currently displayed part to the end part of the electronic document image, the closer the bottom end of the scroll knob 402 to the bottom end of the scroll bar 403 is.

Furthermore, in a case where a part of the electronic document which part includes markers is displayed, the electronic document image is displayed in an aspect in which markers, e.g., markers 407a through 407d are added.

The window 401 also includes a comment display region 405. On the comment display region 405, comments 406a through 406c, which are stored in association with markers 407a through 407c in the marker list, are to be displayed.

Note that the display image illustrated in Fig. 4 is a display image in a case where the scroll amount of the electronic document is not controlled.

(Distribution Analysis Processing)

A marker distribution analysis processing will be described below with reference to Figs. 5 and 6.

Fig. 5 is a flowchart illustrating a flow of a marker distribution analysis processing of the electronic document display device and Fig. 6 illustrates the number 602 of markers included in each section 601 of the electronic document, the numbers of markers being obtained by the distribution analysis processing in accordance with the flowchart of Fig. 5. In this context, each section may refer to a part of a certain number of lines defined by sectioning the electronic document display image with respect to a certain number of lines, or a part defined by sectioning the electronic document data with respect to a predetermined criterion. The predetermined criterion may be an offset location (for example, the number of bits) from the top of the electronic document data in a part corresponding to a location in the electronic document data to which location a marker is added, meta-information in the electronic document data (for example, new page) or the like. Alternatively, the predetermined criterion may be an offset location of data obtained by removing the structured information part included in the electronic document data. In this context, the structured information refers to data which is not directly displayed as characters, such as tagged part or blank character in a case where the electronic document data is data having a tagged structure such as HTML.

Further, Fig. 6 illustrates a case where the electronic document is divided into twenty sections, in which respective sections of (5*N) to (5*N+5)% (where N=0 to 19) indicate the (N+1)th sections from the top of the electronic document.

First, as a precondition before the marker distribution analysis processing is started, the number of markers in each section is reset to 0.

Of marked locations included in the marker list generated by the marker information read section 103, the marker analysis section 110 searches for, in S501, a marked location which is the closest to the top of the electronic document, except for the marked location which has already been found. In other words, immediately after the start of the marker distribution analysis processing, a marked location which is the closest to the top of the electronic document will be searched for.

Subsequently in S502, the marker analysis section 110 determines whether or not a marked location is found. In a case where it is determined that a marked location is found (Yes in S502), the marker analysis section 110 determines, in S503, whether or not the section to which the searched-out marked location belongs and the section to which the marked location previously searched out are identical. When it is determined that the sections are identical, or that the marked location is first found after the start of the distribution analysis processing (Yes in S503), the processing goes to S505. On the contrary, when the sections are not identical (No in S503), the marker analysis section 110 concludes the number of markers in a section before the section in question (S504) and the processing goes to S505. In S505, the marker analysis section 110 adds 1 to the number of markers in the section determined in S503, and the processing returns to S501.

On the contrary, when it is determined that the marked location is not found (No in S502), the marker analysis section 110 concludes, in S506, the numbers of the markers in all sections where the number of the markers has not been determined, and the processing ends.

As described above, performing the marker distribution processing for each predetermined section of the electronic document makes it possible to obtain data as illustrated in Fig 6 (hereinafter referred to as "marker distribution data") in which the each predetermined section of the electronic document and the number of markers included in the each section are associated. The data can be used to control a scroll amount of the electronic document, which will be described later.

(UI in a Case Where an Electronic Document is Displayed in an Aspect in Which a Marker is Added, When a Scroll Amount is Effectively Controlled)

As described above, the marker analysis section 110 generates the marker distribution data, on the basis of the marker list generated by the marker information read section 103 and the electronic document image generated by the document rendering section 106. And, the display control section 107 generates an electronic document image in an aspect in which a marker is added, with the use of the marker distribution data and the electronic document image.

The following will discuss a UI (user interface) in a case where the electronic document image is displayed in an aspect in which a marker is added.

Fig. 9 illustrates an example of the display image in which the electronic document image is displayed on a rendering result display region 804.

As illustrated in Fig. 9, a window 801 includes a scroll knob 802, a scroll bar 803 (a designation receiving region), and a rendering result display region 804. On the rendering result display region 804, not only the electronic document image but also a marker 805 added to the electronic document is displayed. That is, the configuration of the window 801 is equivalent to that of the window 401, except that the comment display region and the comment are not displayed.

In contrast to the scroll bar 403 of the window 401, however, the scroll bar 803 of the window 801 includes a part which can be distinguished from other part of the scroll bar 803. That is, the scroll bar 803 includes a colored part (a part other than a white background of the scroll bar 803 in Fig. 9) colored with a color different from the background color (the white background of the scroll bar 803 in Fig. 9).

Distribution of the colored part in the scroll bar 803 represents distribution of markers added to the electronic document. Particularly, for example, in a case where the electronic document has M sections, the scroll bar 803 is divided into M regions. And, in a case where there exist more than a certain number (e.g., 1) of markers which belong to the Mth section, the Mth region from the top of the scroll bar 803 will be a colored part. The colored parts may be expressed in different tones, i.e., with different color densities, for each region. In this case, the colored parts are expressed in such a way that the greater the number of markers belonging to the Mth section is, the higher in color density of the colored part of the Mth region is, and the less the number of markers belonging to the Mth section is, the lower in color density of the colored part of the Mth region is.

Whereas, in a case where there exist less than a certain number of markers belonging to the Mth section, the Mth region from the top of the scroll bar 803 will not be a colored part (the color of the Mth region is background color).

As one alternative, the colored parts does not have to be expressed in such a way that the greater the number of markers belonging to the Mth section is, the higher in color density of the colored part of the Mth region is, and the less the number of markers belonging to the Mth section is, the lower in color density of the colored part of the Mth region is. That is, the electronic document display device 100 may be configured such that each region of the scroll bar 803 is colored by performing a process which will be described with reference to Fig. 16.

(a) of Fig. 16 is a table illustrating, with respect to each section $A_i$ ($1 \leq i \leq M$, where Ai represents the ith section from the top of the electronic document) of the scroll bar 803, the number of markers belonging to the each section and a normalized value. (b) of Fig. 16 is a graph illustrating color densities in regions which correspond to respective sections $A_{in}$ in the scroll bar 803, in which black points represent normalized values of the respective sections $A_{in}$. In this context, the "normalized value" refers to a value which can be obtained by normalizing the number of markers. The wording "normalizing" means dividing the number of markers by W, where W is the maximum number of markers included in one section of the entire electronic document (M sections). In (a) of Fig. 16, W is 4.

The display control section 107 first calculates normalized values for the respective sections illustrated in (a) of Fig. 16, on the basis of the marker distribution data generated by the marker analysis section 110.

Then, the display control section 107 calculates color density values for the respective sections, the color density values representing densities of a color with which regions corresponding to the respective sections are colored. The term "color density value" is defined as follows.

With respect to the first section ($A_i$) and the last section ($A_M$), the respective color density values of the sections are defined as being equal to normalized values of the sections. With respect to sections ($A_2$ through $A_{M-1}$) other than the first and the last sections, the color density value of each sections is defined as being the greatest value of the normalized value of the each section, a value obtained by dividing the normalized value in one section before the each section by 2, and a value obtained by dividing the normalized value in one section after the each section by 2. That is, the color density values are as represented by the solid line curve in Fig. 16.

Finally, the display control section 107 colors the respective regions of the scroll bar 803 in densities in accordance with the color density values of the respective sections corresponding to the respective regions (when the color density value is more than 0 and less than a predetermined value (e.g., 0), the region is then uncolored (background color)).

The processing for coloring the respective regions of the scroll bar 803 has been described above. As is clear from the definition of the color density value, if the section $A_i$ includes any marker, the i-1th region or the i+1th region will then be colored even when the number of markers included in an adjacent section ($A_{i-1}$ or $A_{i+1}$) is 0. That is, three successive regions are colored in such a manner that the middle region is displayed relatively with higher density than regions adjacent before and after to the middle region.

Regardless of the total numbers of makers included in the entire electronic document, the color density value of the section which has the greatest number of markers is always 1. That is, the region which corresponds to this section will always be colored with a constant density, regardless of the total number of markers.

Therefore, a user can easily specify the marked places, even in a case where the total number of markers included in the entire electronic document is small (for example, in a case where only one section includes one maker, and other sections include no marker). The section having a smaller color density value will be colored with less density, even in a case where the entire electronic document includes a large number of markers in total and each section includes a certain number of markers.

This allows a user to easily find an important part to which markers are intensively added, regardless of the total number of markers included in the entire electronic document. This will motivate a user to add markers and write comments.

(Processing for Controlling a Scroll Amount)

The following will describe a processing for controlling a scroll amount of the electronic document, when a reader moves the scroll knob 802 with the use of the input section 112, with reference to Figs. 3, 6, 9 and 11.

Fig. 11 is a flowchart illustrating a flow of a processing in which the electronic document display device 100 controls a scroll amount of the electronic document, when a reader moves the scroll knob 802 with the use of the input section 112.

When a reader tries to move the scroll knob 802 by operating the input section 112, the display control section 107 calculates a document moving amount in accordance with a moving amount received from the input section 112 (S1001). In this context, the wording "a document moving amount in accordance with a moving amount received from the input section 112" refers to, for example, a default moving amount (the number of moving dots) of the scroll knob 802 moved by a drag operation in a case where the input section 112 is a device including (i) a pointing device such as a mouse, or (ii) a touch panel. The default moving amount (the number of default scrolling lines) caused by scrolling of the electronic document can also be obtained by multiplying the ratio of a default moving amount of the scroll knob 802 to the movable length (the number of dots) of the scroll knob 802 by the length of the entire electronic document (the number of lines).

Subsequently, in S1002, the display control section 107 calculates the sum total of the numbers of markers included in respective sections to which a default scrolling part of the electronic document belongs, with reference to the marker distribution data. In this context, the default scrolling part refers to a range of the number of the default scrolling lines from the last line displayed on the rendering result display region 804 before the scrolling.

The following will explain the processing in S1002 with particular examples referring to Figs. 3 and 6. Preconditions are as follows: the maximum number of lines (the number of lines of 303h) to be displayed at a time on the rendering result display region 804 represents 4% of the number of lines of the entire electronic document (the number of lines of 303H); the number of default scrolling lines represents 13% of the number of lines of the entire electronic document; and L is a value obtained by multiplying the number of lines of the entire electronic document by 11%, where the last line displayed on the rendering result display region 804 before the scrolling is defined as the Lth line. Further, as a precondition, the marker distribution data is as illustrated in Fig. 6.

In this case, the default scrolling part represents within 11% through 24% of the entire electronic document, so that the sum total of the numbers of markers included in the respective sections (sections of 10 to 15%, 15 to 20%, and 20 to 25%) to which the default scrolling part belongs will be 4.

Subsequently, in S1003, the display control section 107 performs the moving amount correction processing. The processing is performed to determine an actual moving amount of the scroll knob 802. The actual moving amount of the scroll knob 802 is calculated on the basis of a) a ratio A of the sum total of the numbers of markers added to the respective sections of the electronic document to which sections the default scrolling part belongs with respect to the total number of markers added to the entire electronic document, and b) a ratio B of the number of lines in all sections of the electronic document to which the default scrolling part belongs with respect to the number of lines of the entire electronic document. In other words, when A is larger than B, that is, when markers exist frequently on the default scrolling part of the electronic document, the actual moving amount of the scroll knob 802 will be smaller than the default moving amount of the scroll knob 802.

After an actual moving amount of the scroll knob 802 is calculated, in S1004, the display control section 107 moves the scroll knob 802 on the basis of the calculated actual moving amount of the scroll knob 802, and generates a display image of the electronic document after being scrolled by a moving amount which corresponds to the actual moving amount of the scroll knob 802 (S1004). Thus, the processing for controlling a scroll amount ends (S1005).

Specifically, the actual moving amount B of the electronic document in the moving amount correction processing (B is represented in percent on the premise that a moving amount of the entire electronic document is 100%) is calculated by the formula below:

$$B = B_{ORG} \times (1 - \alpha \times N / N_{ALL}),$$

where $B_{ORG}$ is a default moving amount (%) of the electronic document, on the premise that a moving amount of the entire electronic document is 100%, N is the number of markers included in a default moving range in the electronic document, $N_{ALL}$ is the number of markers included in the entire electronic document, and $\alpha$ is a constant which satisfies $0 < \alpha < 1$.

It is clear from the formula above that the actual moving amount B of the electronic document is smaller than the default moving amount $B_{ORG}$ of the electronic document, when the default moving range in the electronic document include any marker. For example, on the premise that A is 0.9, N is 4, $N_{ALL}$ is 30, and $B_{ORG}$ is 14%, it is obtained that $B=12.3\%$, the result satisfying $B < B_{ORG}$.

Note that a formula for calculating the actual moving amount of the electronic document is not limited to the formula described above. In other words, the formula for calculating an actual moving amount of the electronic document may be any one, which defines that the actual moving amount of the electronic document is smaller in a case where all markers in the electronic document are included in the default scrolling part of the electronic document, than in a case where the number of markers included in the default scrolling part of the electronic document is 0. For example, when the sum total of the numbers of markers added to the respective sections to which the default scrolling part of the electronic document belongs is more than a certain value (more than a first threshold), the actual number of scrolling lines of the electronic document may be defined as being less than the number of the default scrolling lines.

The processes for controlling a scroll amount in S1001 through S1005 are successively performed (each process is performed for very short unit of time) while a reader moves the scroll knob 802. That is, in a place where many markers are added, a scroll amount of the electronic document for each unit of time will be smaller. Therefore, the scrolling speed of an area where many markers are added will be slower than usual.

Alternatively, in S1002, the sum total of the numbers of markers included in the default scrolling part of the electronic document can be calculated, instead of the sum total of the numbers of markers included in respective sections to which the default scrolling part of the electronic document belongs. That is, in a case where the default scrolling part is within 11% through 24%, the sum total of markers included in the range of 11% through 24% can be calculated, instead of the sum total of markers included in the range of 10% through 25%.

Further alternatively, in S1002, the sum total of the numbers of markers included in the sections other than the section closest to the top of the electronic document and the section closest to the ending of the electronic document may be calculated, instead of the sum total of the numbers of markers included in respective sections to which the default scrolling part of the electronic document belongs. That is, in a case where the default scrolling part is within the range of 11% to 24%, not the sum total of the numbers of markers within 10% to 25% but the sum total 3 of the numbers of markers within 15% to 20% may be calculated.

(Advantages of the Electronic Document Display Device 100)

As described above, the electronic document display device 100 is configured such that the marker analysis section 110 calculates the number of markers included in each of a plurality of sections constituting the electronic document, and, if the input receiving section 109 receives an instruction to display, on the display section 111, a part of a document included in a second section while a part of a document included in a first section is being displayed on the display section 111, then the display control section 107 (i) calculates, on the basis of the numbers of markers calculated by the marker analysis section 110, the number of markers to be displayed when the displayed part is successively shifted from the first section to the second section, and (ii) causes the display section 111 to display a part of the document which part is closer to the part included in the first section, rather than the part received by the input receiving section 109, in a case where the calculated number of markers is more than a certain value.

This leads that more makers are possibly included in the part to be actually displayed on the display section 111 by the electronic document display device 100. Also, the electronic document display device 100 can reduce the risk of a reader's skipping reading marked places located between the part designated to be displayed and the actually displayed part.

Consequently, a reader, who skims an entire document but intensively reads an important part to which many markers are added at once, can efficiently read the entire document without performing jumping processes.

(Embodiment 2)

An electronic document display device 100b in accordance with another Embodiment 2 of the present invention will be next described below with reference to Figs. 7, 8, 10, 12 through 15.

Fig. 7 is a block diagram illustrating main components of the electronic document display device 100b.

The configuration of the electronic document display device 100b in accordance with Embodiment 2 is equivalent to that of the electronic document display device 100, except that a marker distribution analysis processing performed by a marker analysis section 110b is different from the marker distribution analysis processing performed by the that marker analysis section 110, and a display image (UI) generated by a display control section 107b is different from the display image generated by the display control section 107, and a processing for controlling a display location in the electronic document performed by the display control section 107b is different from the processing performed by the display control section 107. Accordingly, the following will discuss solely the marker distribution analysis processing performed by the marker analysis section 110b, the generation of display image by the display control section 107b, and the processing for controlling a display location in the electronic document performed by the display control section 107b. And, other explanation will be omitted.

<A Processing Operation of the Electronic Document Display Device 100b>

(Distribution Analysis Processing)

The following will discuss the marker distribution analysis processing performed by the marker analysis section 110b of the electronic document display device 100b with reference to Figs. 8 and 13.

Fig. 8 is a flowchart illustrating a flow of the marker distribution analysis processing performed by the marker analysis section 110b of the electronic document display device 100b. Fig. 13 illustrates schematically the structure of marker distribution data obtained by the distribution analysis processing in accordance with the flowchart of Fig. 8. The marker distribution data includes the numbers of markers included in respective blocks. The blocks are defined such that, of all markers added to an electronic document, markers located closer to each other belong to a same block, whereas markers located distanced from each other belong to different blocks.

The marked location may be an offset location (for example, the number of bits) of the part corresponding to the location where the marker is added in electronic document data, from the top of the electronic document data, or an offset location of data obtained after removing structured information parts included in the electronic document data. In this case, the markers located closer to each other refer to, for example, markers whose offset locations differ from each other within a predetermined range (i.e., less than a second threshold).

The marked location may be a coordinate of a marker in an electronic document display image generated by the document rendering section 106. In this case, the markers located closer to each other refer to, for example, markers whose coordinates are distanced within a predetermined range (less than the second threshold).

Note that marker distribution data should be empty, as a precondition before the start of a marker distribution analysis processing.

Of marked locations included in the marker list generated by the marker information read section 103, the marker analysis section 110b searches for, in S701, a marked location which is the closest to the top of the electronic document, except for the marked location which has already been found. In other words, immediately after the start of the marker distribution analysis processing, a marked location which is the closest to the top of the electronic document will be searched for.

Subsequently, in S702, the marker analysis section 110b determines whether or not a marked location is found. In a case where it is determined that a marked location is found (Yes in S702), the marker analysis section 110b determines, in S703, with reference to the marker distribution data, whether or not a block exists whose start location 1201 is located before the searched-out marked location.

In a case where the marker distribution data is empty, that is, in a case where no block exists whose start location 1201 is located before the searched-out marked location (No in S703), the marker analysis section 110b defines, in S706, the searched-out marked location as the start location 1201 of the block, and adds a new block which has a distance 1204 to the last block, which is, for example, "N/A", to the marker distribution data and the processing goes to S707. Then, the marker analysis section 110b defines, in S707, the number 1203 of markers in the new block as "1", and stores, in S708, a value indicating the searched-out marked location as a variable for storing the lastly searched-out marked location, and the processing returns to S701.

On the contrary, in a case where the marker distribution data is not empty, that is, in a case where a block exists whose start location 1201 is located before the searched-out marked location (Yes in S703), the processing goes to S704. In S704, the marker analysis section 110b determines whether or not the searched-out marked location and the marked location lastly added to the block lastly added to the marker distribution data are within a predetermined range. In a case where these marked locations are not within a predetermined range (No in S704), the marker analysis section 110b stores, in S705, (i) the lastly added marked location, as an end location 1202 of the block lastly added to the marker distribution data, and (ii) the distance between the searched-out marked location and the lastly added marked location, as a distance 1205 to a next block.

Then in S706, the marker analysis section 110b defines the searched-out marked location as the start location 1201 of the block, and adds to the marker distribution data a new block whose distance 1204 to the last block and whose distance 1205 to a next block stored in S705 are identical to each other. Then, the marker analysis section 110b defines, in S707, the number 1203 of markers in the new block as "1", and adds, in S708, a value indicating the searched-out marked location to the variable for storing the lastly searched-out marked location, and the processing returns to S701.

On the contrary, in a case where the searched-out marked location and the marked location lastly added to the block lastly added to the marker distribution data are within a predetermined range (Yes in S704), the processing goes to S707.

In S707, the marker analysis section 110b adds 1 to the value of the number 1203 of markers in the block lastly added to the marker distribution data. Then, the marker analysis section 110b stores, in S708, a value indicating the searched-out marked location, as the variable for storing the lastly searched-out marked location, and the processing returns to S701.

In a case where it is not determined in S702 that a marked location is found, the processing goes to 5709. In S709, the marker analysis section 110b defines a value of the distance 1205 between the lastly added block and a next block as "N/A", and the processing ends.

As described above, the marker analysis section 110b will generate the marker distribution data as illustrate in Fig. 13, as a result of the marker distribution analysis processing.

(UI in a Case Where an Electronic Document is Displayed in an Aspect in Which a Marker is Added, When a Processing for Controlling a Part of an Electronic Document Which Part is to be Displayed is Effectively Performed)

The following will discuss a UI (user interface) in a case where the display control section 107b of the electronic document display device 100b displays an electronic document image in an aspect in which a marker is added.

Fig. 10 illustrates an example of a display image in which an electronic document image is displayed on a rendering result display region 904.

As illustrated in Fig. 10, a window 901 includes a scroll knob 902, a scroll bar 903, and the rendering result display region 904. On the rendering result display region 904, a marker 905 added to an electronic document is displayed, together with the electronic document image.

The window 901 further includes a display region (a block display region 907) for displaying places in the electronic document to which blocks exist and the numbers of markers included in respective of the blocks. A lateral direction of the block display region 907 indicates parts of the electronic document and the left end of the block display region 907 indicates the top of the electronic document and the right end of the block display region 907 indicates the ending of the electronic document. The distribution of bars 908 in a lateral direction indicates in which parts of the electronic document blocks exist. Further, a bar 908 indicates one block and the length of the bar 908 in a longitudinal direction indicates the number of markers included in the corresponding block.

A zone 906 is displayed on the block display region 907. The zone 906 indicates the location of the part displayed on the rendering result display region 904 with respect to the entire electronic document. That is, as the scroll knob 902 is moved from the top to the bottom of the movable region, the zone 906 will be moved from left to right.

Upon receiving a crick or tap operation on the block display region 907 (a designation receiving region) via an input section 112, the display control section 107b displays, on the rendering result display region 904, (i) a location in the electronic document, which corresponds to a designated location 909P, and (ii) the zone 906 on the location 909P. Specifically, when the ratio of a distance 909w from the left end of the location 909P to a width 909W of the block display region 907 in a lateral direction is 8:26, the display control section 107b will display, on the rendering result display region 904, a location of 30% from the top of the electronic document, on the premise that the entire electronic document is defined as 100%.

(Processing for Controlling a Part of an Electronic Document Which Part is to be Displayed)

The following will discuss a processing for controlling a part of the electronic document which part is to be displayed, with reference to Figs. 12 through 14. The processing is to be performed when a reader cricks a mouse of the input section 112 while a mouse cursor is on the block display region 907.

Fig. 12 is a flowchart illustrating a flow of a processing in which the electronic document display device 100 controls a part to be displayed of the electronic document, when a mouse of the input section 112 is cricked while a mouse cursor is on the block display region 907.

When a reader cricks a mouse of the input section 112 while a mouse cursor is being on the location 909P in the block display region 907, then the display control section 107b calculates, in S1101, the ratio of the distance 909w from the left end of the location 909P to the width 909W.

Subsequently, in S1102, the display control section 107b determines whether or not the displayed part is to be corrected. Specifically, the display control section 107b determines such that the correction is to be made when the location 909P is double cricked, whereas the correction is not to be made when the location 909P is single cricked.

When it is determined that the correction is not to be made (No in S1102), in S1106, the display control section 107b displays, on the rendering result display region 904, a location of 909w/909W*100% from the top of the electronic document, on the premise that the top of the electronic document is 0% and the ending of the electronic document is 100%. Then, the processing ends.

Whereas, when it is determined that the correction is to be made (Yes in S1102), in S1103, the display control section 107b searches for a block located within a predetermined range of 909w/909W*100% from the top of the electronic document (a distance from the location is less than a third threshold), with reference to the start location 1201 and the end location 1202 of each block of the marker distribution data. For example, the display control section 107b searches for a block within a range of a few percent of 909w/909W*100% from the top of the electronic document.

In a case where no block is found (No in S1104), the processing goes to S1106, and the display control section 107b displays, on the rendering result display region 904, a location of 909w/909W*100% from the top of the electronic document, on the premise that the top of the electronic document is 0% and the end of the electronic document is 100%. Then, the processing ends.

Whereas, in a case where any one or more blocks are found (Yes in S1104), the processing goes to S 1105. In a case where the location of 909w/909W*100% from the top of the electronic document belongs to any one of the blocks, in S1105, the display control section 107b determines, as a jump-target location, a location of a first marker in the corresponding block. For example, if 909w/909W*100%=20%, and the marker distribution data is as illustrated in Fig. 13, a location of 18% from the top of the electronic document is then determined as a jump-target location.

On the contrary, in a case where the location of 909w/909W*100% from the top of the electronic document belongs to none of the blocks, the display control section 107b determines, as a jump-target location, a location of a first marker in the block closest to the location of 909w/909W*100%. For example, if 909w/909W*100%=30% and the marker distribution data is as illustrated in Fig. 13, then a closest block is one in which the start location 1201 is at a point of 18% and the end location 1202 is at a point of 21%. Accordingly, a location at a point of 18%, which is the top of the block, is determined as a jump-target location.

After a jump-target location is determined, in S1106, the display control section 107b displays, on the rendering result display region 904, a document of the determined jump-target location, and the processing ends.

So far, the flow of the processes for controlling a part of the electronic document which part is to be displayed has been described. Note, however, that the display control section 107b can determine, in S1102, whether or not a correction is to be made, on the basis of criteria other than the fact that the mouse is single cricked or double cricked. For example, the display control section 107b may determine, in S1102, whether or not a correction is to be made, on the basis of information on criteria designated in advance by a reader, which information is stored in the setting storage section 101. Further, the display control section 107b may be configured so that a correction is to be made when both of the press of a specified key of a keyboard of the input section 112 and a mouse crick of the input section 112 are detected simultaneously, whereas a correction is not to be made when only a mouse crick is detected.

Further, the display control section 107b may determine, in S1103, a certain scope of search of blocks, on the basis of information on a scope of search designated in advance by a reader, which scope of search is stored in the setting storage section 101. Alternatively, the display control section 107b may determine a certain scope of search of blocks, on the basis of the length of time period while the button of a mouse of the input section 112 is being continuously pressed. For example, the display control section 107b may search for blocks within a range of 5% from the location of a mouse cursor when the button of a mouse is pressed for a short time period, and search for blocks within a range of 10% from the location of a mouse cursor when the button of a mouse is pressed for a longer time period. Alternatively, the display control section 107b may search for blocks in a range proportional to the time period while the button is being pressed.

Note further that the jump-target location determined in S1105 is not limited to a marker in the top of the block. That is, the display control section 107b may determine, as a jump-target location, any one of the start location 1201 and the end location 1202 of the block, whose value is closer to 909w/909W*100%. When the location of 909w/909W*100% from the top of the electronic document belongs to any one of the blocks, the display control section 107b may determine a location of 909w/909W*100% from the top of the electronic document as a jump-target location, without changing the jump-target location. Whereas, in a case where the location of 909w/909W*100% from the top of the electronic document belongs to none of the blocks, the display control section 107b may cause a reader to select one of blocks before and after the location, instead of the block closest to the location, as a jump-target location.

The following will discuss a UI of the block display region 907, for causing a reader to select one of blocks as a jump-target location, with reference to Fig. 14.

(a) of Fig. 14 illustrates a UI of the block display region 907 immediately after the display control section 107 detects the press of a mouse cursor. (b) of Fig. 14 illustrates a UI of the block display region 907 after the press of a mouse cursor has been detected and a certain period of time has passed while the mouse cursor is being continuously pressed. (c) of Fig. 14 illustrates a UI of the block display region 907 in the situation in which the mouse cursor is dragged and moved.

In (a) of Fig. 14, an input point 1301 indicates a location of a mouse cursor 1306 when the button of the mouse is cricked. Bars 1302 and 1303 indicate, respectively, blocks before and after the input point 1301.

After the press of the mouse cursor 1306 has been detected and a certain period of time has passed while the mouse cursor is being continuously pressed, the displays of the bars 1302 and 1303 are changed so as to be distinguished from bars indicating other blocks (see (b) of Fig. 14). Further, above the bars 1302 and 1303, a guide 1304 for defining the block of the bar 1302 as a jump-target location, and a guide 1305 for defining the block of the bar 1303 as a jump-target location are displayed, respectively.

Subsequently, as illustrated in (c) of Fig. 14, a jump-target location is determined by dragging the mouse cursor 1306 and releasing the button on the guide 1304 or the guide 1305.

(Advantages of the Electronic Document Display Device 100b)

As described above, the electronic document display device 100b is configured such that, with respect to one or more blocks defined so that two adjacent markers in the electronic document belong to different blocks in a case where a distance between the two adjacent markers is more than a certain value, the marker analysis section 110b calculates the number of markers included in the each blocks. The electronic document display device 100b is further configured such that, when a part received by the input receiving section 109 and a distance between the part and the closest block to the part is less than a certain value, the display control section 107b causes the display section 111 to display a part of the document including the first marker in the block.

Therefore, the electronic document display device 100b surely causes the display section to display the marked place even in a case where an instruction to jump to a location closer to a marked place in the electronic document is received.

Consequently, the electronic document display device 100b enables a reader who wants to read the marked places to surely read the marked places by performing only one time jumping process.

(Another Example of UI in a Case Where an Electronic Document is Displayed in an aspect in which a Marker is Added, When a Processing for Controlling a Part of an Electronic Document Which Part is to be Displayed is Effectively Performed)

The UI displayed by the electronic document display device 100b has been described with reference to Fig. 10. Note, however, that a UI displayed by the display control section 107 of the electronic document display device 100b is not limited to the UI of Fig. 10. That is, as illustrated in Fig. 15, the display control section 107b can display, as a UI, a window 1401 including colored parts 1408 within the scroll bar 1403, instead of the window 901 including the block display region 907, in order to display (i) locations in the electronic document where blocks exist and (ii) the numbers of markers included in the respective blocks.

In this case, the colored parts 1408 play a roll similar to that of the bars 908 in the UI of Fig. 10, so that the locations in the electronic document where blocks exist are indicated by distribution of the colored parts 1408 in a longitudinal direction. One colored part 1408 indicates one block. Further, the colored parts 1408 may indicate the difference in the numbers of markers included in the corresponding blocks with the use of color density gradation.

Furthermore, the processing for controlling a part of the electronic document which part is to be displayed is performed when the button of the mouse of the input section 112 is cricked while the mouse cursor is being on the location 1409P. The processing is performed in dependence on (i) the ratio of the distance 1409w from the top of the scroll bar 1403 to the location 1409P with respect to the length 140W of the scroll bar and (ii) a value of the marker distribution data.

A scroll knob 1402, a rendering result display region 1404, and markers 1405 in the UI play similar rolls of the scroll knob 902, the rendering result display region 904, and the markers 905 in the UI of Fig. 10, and their explanation will be omitted.

<Additional Matters>

In order to allow a reader to efficiently read documents without performing wastefully repeated jumping processes, in Embodiment 1, the display control section 107 reduces a scroll amount of the electronic document with respect to a moving amount received from the input section 112, however, another method can also be used. That is, the display control section 107 can remain the scroll amount of the electronic document with respect to the moving amount received from the input section 112 unchanged, but reduce a moving amount received from the mouse (the number of counts of the mouse) depending on a moving distance of the mouse of the input section 112 when a part to which a marker is added is scrolled. For example, in a case where the UI of Fig. 10 is used, the display control section 107 can reduce the moving amount of the scroll knob 902 which depends on the moving distance of the mouse of the input section 112 when the zone 906 overlaps with any one of the bars 908. In a case where the UI of Fig. 15 is used, the display control section 107 can reduce the moving amount of the scroll knob 1402 which depends on the moving distance of the mouse of the input section 112 when the scroll knob 1402 overlaps with any one of the colored parts 1408.

Controlling the moving amount in the above-described manner enables the scrolling speed of the electronic document to be reduced when a part to which a marker is added is scrolled, even in a case where the reader moves the mouse for a same distance during the scroll knob is dragged. Therefore, a reader can carefully read the places where markers are added. This enables a reader to read a document efficiently without performing wastefully repeated jumping processes.

The scrolling speed can also be reduced by (i) decreasing a scroll amount of the electronic document with respect to a moving amount of the scroll knob and (ii) continuously displaying the part displayed on the display section after the scrolling for a certain time period even if a further instruction to scroll is received.

Although, in Embodiment 1, the marker analysis section 110 generates marker distribution data by sectioning an electronic document by each 5%, on the premise that the entire electronic document is 100%, the range of percent for each section may also be designated by a reader via the input section 112. In this case, information on the range of percent designated by a reader will be stored in the setting storage section 101. Furthermore, although, in Embodiment 1, the marker distribution data includes information on the number of markers included in each of the sections of 0~5%, through, 95~100%, the present invention is not limited to the aspect. In other words, the electronic document display device 100 may be configured not to maintain information for a section including no marker, that is "the number of markers included in the section is 0", as the marker distribution data.

The electronic document display devices 100 and 100b do not have to include the display section 111, the input section 112, and the document data storage section 104. In this case, the electronic document display devices 100 and 100b can be connected in a communication-enabled manner to an external display device, an input device, and a storage device for storing document data.

Note that the wording "marker" used in the embodiments is not limited only to an eyemark or a sign which can be viewed by a reader, such as a character ornamentation, e.g., a highlight pen, an underline, and a half-tone dot meshing. That is, the concept of the "marker" can encompass a computer readable sign, which defines a specified character string in the electronic document (for example, tagged information enclosing a character string), even if the sign cannot be viewed by a reader.

The above-mentioned color density value for each section may also be defined as follows. That is, a color density value may be the largest value of a normalized value of a target section, a value obtained by multiplying a normalized value of one section before the section by $(n-1)/n$, a value obtained by multiplying a normalized value of two sections before the section by $(n-2)/n$, and the like, a value obtained by $1/n$ times of a normalized value of $n-1$ section before the section, ..., a value obtained by multiplying a normalized value of one section after the section by $(n-1)/n$, a value obtained by multiplying a normalized value of two sections after the section by $(n-2)/n$, ..., and a value obtained by multiplying a normalized value of an $n-1$ section after the section by $1/n$ (Definition A). Alternatively, a color density value may be the largest value of a normalized value of a target section, a value obtained by dividing a normalized value of one section before the section by 4, a value obtained by dividing a normalized value of two sections before the section by 9, ..., a value obtained by dividing a normalized value of an $n-1$ section before the section by $n^2$, ⋯ , a value obtained

by dividing a normalized value of one section after the section by 4, a value obtained by dividing a normalized value of two sections after the section by 9, $\cdots$, and a value obtained by dividing a normalized value of an n-1 section after the section by $n^2$ (Definition B, in which the solid line of the graph of Fig. 17 indicates a color density value where n=2). In a case where a color density value is defined by the Definition B, a difference in color density between in a part corresponding to a section including a marker and a part which corresponding to a section including no marker will be greater, compared with a case of the Definition A. Therefore, in this case, a user can easily (i) specify a place in which markers are intensively added by viewing the scroll bar 803, and (ii) recognize a summarized distribution of markers in the electronic document.

Some particular examples of the definition of a color density value have thus been described. Note, however, that the definition of a color density value is not limited to the above-mentioned examples. It is sufficient that a color density value of each of M sections is defined as follows.

That is, for each section i(1~M), a function is defined. The function is any function which is defined by a section [$min_i$, $max_i$], monotone increases in case of x<i, and monotone decreases in a case of i<x, and is equal to a normalized value in the ith section in case of x=i (that is, M functions are defined for $f_1(x)$ ... $f_M(x)$). It is further defined that only the functions $f_j(x)$ ... $f_k(x)$ of M functions include i in the defined region. In this case, a color density value of the ith section (target region) may be defined as being a maximum of values of functions ($f_j(i)$ ... $f_k(i)$) for the functions in a case of x=i. In this case, the display control section 107 calculates $f_j(i)$ ... $f_k(i)$ to obtain a color density value, and colors a region in the scroll bar 803 which region corresponds to the section i with a color density in accordance with the color density value of the ith section. In view of the definition of M functions, it is clear that $f_j(i)$ is a value (a candidate value) obtained by subtracting a value corresponding to the distance |i-j| from the normalized value of $f_j(j)$ of the jth section (a peripheral region). The same applied to $f_{j+1}(i)$ through $f_k(i)$, except for $f_i(i)$ which is a normalized value of the ith section.

(Program and Recording Medium)

The electronic document display devices 100 and 100b can be configured by hardware logic. Alternatively, the electronic document display devices 100 and 100b can be achieved by software with the use of a CPU (Central Processing Unit), as described below.

That is, the electronic document display devices 100 and 100b include: a CPU for implementing instructions of a program which achieves functions, such as a MPU; a ROM (Read Only Memory) for storing the program; a RAM (Random Access Memory) for developing the program to a implementable form; and a storage device (recording medium) for storing the program and the various data, such as a memory.

And the object of the present invention can be achieved not only in a case where a program is supported fixedly to a memory, but also in such a way that the electronic document display devices 100 and 100b (i) are supplied with a recording medium in which program codes (a implementable form of the program, an intermediate code of the program, or a source program) of the program are stored and (ii) read out the program codes stored in the recording medium to implement the program codes.

Note that the recording medium is not limited to a certain structure or type. That is, the recording medium may be, for example, (i) a tape such as an electromagnetic tape or a tape cassette, (ii) a disc including a magnetic disc such as Floppy(Registered Trademark) disc/a hard disc and an optical disk such as CD-ROM/MO/MD/DVD/CD-R, (iii) a card such as IC card (including a memory card)/an optical card, or (iv) a semiconductor memory such as a mask ROM/ EPROM/EEPROM/Flash ROM.

Further, the object of the present invention can be achieved by configuring the electronic document display devices 100 and 100b to be connectable to a communication network. In this case, the electronic document display device 100 and 100b are supplied with the program codes via the communication network. The communication network is not limited to a specified type or form of a communication network, and may be any communication network which can provide the electronic document display devices 100 and 100b with program codes. For example, the communication network may be an internet, an intranet, an extra net, LAN, ISDN, VAN, CATV communication networks, a Virtual Private Network, a telephone line, a cellular communication network, or a satellite communication network.

A transmission medium constituting the communication network is not limited to a specified construction or type of a transmission medium, and may be any medium which can transmit program codes. The transmission medium may be, for example, (i) a wired line such as IEEE1394, USB, a power-line carrier, a cable television line, a telephone line, an ADSL (Asymmetric Digital Subscriber Line) line, or (ii) a wireless line such as infrared ray, e.g., IrDA or remote control, Bluetooth (Registered Trademark), 802.11 wireless, HDR, a cellular telephone network, a satellite connection, and a terrestrial digital network. The present invention can be achieved in a form in which the program codes are computerized data signals included in carrier waves, which computerized data signals are embodied by an electronic transmission.

The present invention is not limited to the above-described embodiments, and various modifications are possible within a scope defined by the Claims. The technical scope of the present invention encompasses embodiments obtained by appropriately combining the technical means disclosed in different embodiments.

The electronic document processing device in accordance with the present invention is preferably configured such that the marker analysis means calculates the number of marked places included in each of a plurality of regions constituting the electronic document; and if the receiving means receives an instruction to display, on the display section, a second region of the plurality of regions in the electronic document while a first region of the plurality of regions is being displayed on the display section, then the display control means (i) calculates, on the basis of the number of marked places calculated by the marker analysis means, the number of marked places to be displayed when the displayed part is successively shifted from the first region to the second region, and (ii) causes the display section to display a part of the electronic document, which part is closer to the displayed part, rather than the designated part in a case where the calculated number of marked places to be displayed is not less than a first threshold.

According to the above configuration, the electronic document processing device causes the display section to display a part of the electronic document, which part is closer to the displayed part, rather than the designated part in a case where the number of marked places to be displayed when a displayed part is successively shifted from the first region including the actually displayed part to the second region including the designated part is not less than the first threshold.

Therefore, the electronic document processing device further allows a reader to reduce a risk of skipping one or more marked place located between the designated part and the actually displayed part.

The electronic document processing device is preferably configured such that the display control means causes the display section to display a designation receiving region as a user interface for receiving the designation for designating the designated part in the electronic document which designated part is designated to be displayed on the display section, the designation receiving region including sections respective of which correspond to the regions constituting the electronic document; and the designation receiving region displayed by the display control means being such that the numbers of marked places included in the respective regions of the electronic document are distinguishable on the designation receiving region, the regions respectively corresponding to the sections included in the designation receiving region.

The electronic document processing device is preferably configured such that, of the sections included in the designation receiving region, the display control means causes the display section to display, with color density gradation, sections corresponding to the regions each of which including one or more marked place, the color density gradation being gradated in accordance with the numbers of the marked places included in the respective sections.

According to the above configuration, the electronic document processing device further allows a reader to view the designation receiving region to comprehend in which region of the electronic document many markers are added. The electronic document processing device is preferably configured such that the display control means causes the display section to display, with color densities, the respective regions corresponding to the sections, wherein the color densities are determined for each of the respective regions in accordance with a largest value of (i) a normalized value obtained by normalizing the number of marked places included in the region as a target region and (ii) a plurality of candidate values obtained by subtracting a value corresponding to a distance from a peripheral region to the target region, from a normalized value of the peripheral region, the peripheral region being defined as each of a plurality of regions within a predetermined range from the target region. In this context, "normalizing" means "dividing by W", where W is the maximum of the numbers of markers included in the respective regions constituting the electronic document.

According to the above configuration of the electronic document processing device, each of the sections in the designation receiving region will surely be colored, in a case where there exit one or more marked places in either the target region which corresponds to the each of the sections, or the peripheral region within a predetermined range from the target region. That is, even if a marked place exist in one region in an electronic document and no marked place exists in a predetermined range from the region, the electronic document processing device will cause the display section to display the designation receiving region so that the section corresponding to the region including a marked place has a higher color density and the section corresponding to the peripheral region has a lower color density such that it is reduced depending on the distance from the region including a marked place.

Further, the electronic document processing device will cause the display section to display a section corresponding to a region in the designation receiving region which region has the maximum number of markers, with a constant color density, regardless of the sum total of markers included in the entire electronic document. It is because a normalized value of the region having the maximum number of markers is always 1.

Therefore, the electronic document display device further allows a user to specify more easily the place of the electronic document to which markers are intensively added, regardless of the sum total of markers included in the entire electronic document.

The electronic document processing device is preferably configured such that the marker analysis means extracts the marked places included in each of one or more blocks, the one or more blocks being defined so that two adjacent marked places in the electronic document belong to different blocks in a case where a distance between the two adjacent marked places is not less than a second threshold; and in a case where a distance between the designated part and a block closest to the designated part is not more than a third threshold, the display control means causes the display section to display a part of the electronic document which part includes any one of the marked place or marked places included in the block.

According to the above configuration, the electronic document processing device causes the display section to display, in a case where a distance between the designated part and a block closest to the designated part is less than a third threshold, a part of the electronic document which part includes any one of the marked place or marked places included in the block. Generally, a reader who wants to read a marked place would designate, as a displayed part on the display section, a part closer to the place to which a marker is added. Consequently, a reader would designate the part included in the block including this marker, or the part closer to the block.

Therefore, the electronic document processing device further allows a reader who wants to read a marked place to surely read the marked place without performing repeated jumping processes.

Furthermore, the electronic document processing device is preferably configured such that in a case where a distance between the designated part and a block closest to the designated part is more than the third threshold, the display control means causes the display section to display the designated part on the display section.

The electronic document processing device is preferably configured such that the display control means causes the display section to display a designation receiving region as a user interface for receiving the designation for designating the designated part in the electronic document which designated part is designated to be displayed on the display section, the designation receiving region being such that a range of each of the one or more blocks in the electronic document is distinguishable on the designation receiving region.

According to the above configuration, the electronic document processing device further allows a reader to view the designation receiving region to comprehend in which part of the electronic document a marker is added.

The electronic document processing device is preferably configured such that the display control means causes the display section to display a designation receiving region as a user interface for receiving the designation for designating the designated part in the electronic document which designated part is designated to be displayed on the display section, the designation receiving region being such that the number of the marked places included in each of the one or more blocks is distinguishable on the designation receiving region.

According to the above configuration, the electronic document processing device further allows a reader to view the designation receiving region to comprehend in which block in the electronic document many markers are added.

The electronic document processing device is preferably configured such that, in a case where there exist blocks adjacent before and after to the designated part, the receiving means is capable of receiving designation of any one of the blocks adjacent before and after to the designated part; and the display control means causes the display section to display a part of the electronic document which part includes any one of the marked place or marked places included in the block designated by the designation received by the receiving means.

According to the above configuration, the electronic document processing device further allows a reader to select which one of a marked place located before the designated part and a marked place located after the designated part is to be displayed on the display section.

Furthermore, the electronic document processing device is preferably configured such that, in a case where the receiving means successively receives designations of designated parts in the electronic document, the display control means causes the display section to display a part of the electronic document, the part ranging differently from the designated part every time the receiving means receives the designation.

Further, the electronic document processing device is preferably configured such that the display control means causes the display section to display the electronic document in such a manner that a part of the electronic document is displayed for a longer time period if the part includes the marked place than if the part of the electronic document includes no marked place.

According to the above configuration, the electronic document processing device further allows a reader to surely view a part of the document which part includes at least one marker.

The electronic document processing device is preferably configured such that the receiving means receives the designation of the designated part in the electronic document, by receiving any one of plural types of input signals from an input section; and the display control means determines, according to the type of the input signal received by the receiving means, whether the designated part designated by designation received by the receiving means is displayed on the display section or the part ranging differently from the designated part designated by designation received by the receiving means is displayed on the display section.

According to the above configuration, the electronic document processing device further allows a reader to select whether or not a part to be displayed on the display section is changed, depending on the input content of the input section, when the reader designates a designated part of the electronic document, which designated part is to be displayed on the display section.

The electronic document processing device is preferably configured such that the receiving means receives the designation of the designated part in the electronic document via a pointing device.

Furthermore, the present invention can be an electronic document display device including an electronic document processing device, wherein the electronic document display device includes the display section. The electronic document processing device can be attained by a computer. In this case, the present invention encompasses (i) a program which causes a computer to function as the means to achieve the electronic document processing device with the use of the computer, and (ii) a computer-readable recording medium storing the program.

Industrial Applicability

The electronic document display device in accordance with the present invention is applicable to portable book terminals or cellular phones, and PCs.

Reference Signs List

| | |
|---|---|
| 100 | Electronic document display device (Electronic document processing device) |
| 101 | Setting storage section |
| 102 | Marker information storage section |
| 103 | Marker information read section |
| 104 | Document data storage section |
| 105 | Document data read section |
| 106 | Document rendering section |
| 107 | Display control section (Display control means) |
| 108 | Plotting section |
| 109 | Input receiving section (Receiving means) |
| 110 | Marker analysis section (Marker analysis means) |

**Claims**

1. An electronic document processing device comprising:

   a marker analysis means for analyzing distribution of marked places in an electronic document to which markers are added;
   a receiving means for receiving designation for designating a designated part of the electronic document, which designated part is designated to be displayed on a display section; and
   a display control means for causing the display section to display a part of the electronic document on the basis of the distribution of the marked places analyzed by the marker analysis means, the part ranging differently from the designated part, so as to increase possibility of the marked places being displayed on the display section.

2. The electronic document processing device as set forth in Claim 1, wherein:

   the marker analysis means calculates the number of marked places included in each of a plurality of regions constituting the electronic document; and
   if the receiving means receives an instruction to display, on the display section, a second region of the plurality of regions in the electronic document while a first region of the plurality of regions is being displayed on the display section, then the display control means (i) calculates, on the basis of the number of marked places calculated by the marker analysis means, the number of marked places to be displayed when the displayed part is successively shifted from the first region to the second region, and (ii) causes the display section to display a part of the electronic document, which part is closer to the displayed part, rather than the designated part in a case where the calculated number of marked places to be displayed is not less than a first threshold.

3. The electronic document processing device as set forth in Claim 2, wherein:

   the display control means causes the display section to display a designation receiving region as a user interface for receiving the designation for designating the designated part in the electronic document which designated part is designated to be displayed on the display section, the designation receiving region including sections respective of which correspond to the regions constituting the electronic document; and
   the designation receiving region displayed by the display control means being such that the numbers of marked places included in the respective regions of the electronic document are distinguishable on the designation receiving region, the regions respectively corresponding to the sections included in the designation receiving region.

**4.** The electronic document processing device as set forth in Claim 3, wherein:

of the sections included in the designation receiving region, the display control means causes the display section to display, with color density gradation, sections corresponding to the regions each of which including one or more marked place, the color density gradation being gradated in accordance with the numbers of the marked places included in the respective sections.

**5.** The electronic document processing device as set forth in Claim 3, wherein:

the display control means causes the display section to display, with color densities, the respective regions corresponding to the sections, wherein the color densities are determined for each of the respective regions in accordance with a largest value of (i) a normalized value obtained by normalizing the number of marked places included in the region as a target region and (ii) a plurality of candidate values obtained by subtracting a value corresponding to a distance from a peripheral region to the target region, from a normalized value of the peripheral region, the peripheral region being defined as each of a plurality of regions within a predetermined range from the target region.

**6.** The electronic document processing device as set forth in Claim 1, wherein:

the marker analysis means extracts the marked places included in each of one or more blocks, the one or more blocks being defined so that two adjacent marked places in the electronic document belong to different blocks in a case where a distance between the two adjacent marked places is not less than a second threshold; and in a case where a distance between the designated part and a block closest to the designated part is not more than a third threshold, the display control means causes the display section to display a part of the electronic document which part includes any one of the marked place or marked places included in the block.

**7.** The electronic document processing device as set forth in Claim 6, wherein:

the display control means causes the display section to display a designation receiving region as a user interface for receiving the designation for designating the designated part in the electronic document which designated part is designated to be displayed on the display section, the designation receiving region being such that a range of each of the one or more blocks in the electronic document is distinguishable on the designation receiving region.

**8.** The electronic document processing device as set forth in Claim 6, wherein:

the display control means causes the display section to display a designation receiving region as a user interface for receiving the designation for designating the designated part in the electronic document which designated part is designated to be displayed on the display section, the designation receiving region being such that the number of the marked places included in each of the one or more blocks is distinguishable on the designation receiving region.

**9.** The electronic document processing device as set forth in Claim 6, wherein:

in a case where a distance between the designated part and a block closest to the designated part is more than the third threshold, the display control means causes the display section to display the designated part on the display section.

**10.** The electronic document processing device as set forth in Claim 6, wherein:

in a case where there exist blocks adjacent before and after to the designated part, the receiving means is capable of receiving designation of any one of the blocks adjacent before and after to the designated part; and the display control means causes the display section to display a part of the electronic document which part includes any one of the marked place or marked places included in the block designated by the designation received by the receiving means.

**11.** The electronic document processing device as set forth in Claim 1, wherein:

in a case where the receiving means successively receives designations of designated parts in the electronic document, the display control means causes the display section to display a part of the electronic document, the part ranging differently from the designated part every time the receiving means receives the designation.

12. The electronic document processing device as set forth in Claim 11, wherein:

the display control means causes the display section to display the electronic document in such a manner that a part of the electronic document is displayed for a longer time period if the part includes the marked place than if the part of the electronic document includes no marked place.

13. The electronic document processing device as set forth in any one of Claims 1 through 12, wherein:

the receiving means receives the designation of the designated part in the electronic document, by receiving any one of plural types of input signals from an input section; and
the display control means determines, according to the type of the input signal received by the receiving means, whether the designated part designated by designation received by the receiving means is displayed on the display section or the part ranging differently from the designated part designated by designation received by the receiving means is displayed on the display section.

14. The electronic document processing device as set forth in any one of Claims 1 through 12, wherein:

the receiving means receives the designation of the designated part in the electronic document via a pointing device.

15. An electronic document display device comprising an electronic document processing device as recited in any one of Claims 1 through 14, wherein the electronic document display device comprises the display section.

16. An electronic document processing method comprising the steps of:

analyzing distribution of marked places in an electronic document to which markers are added;
receiving designation for designating a designated part of the electronic document, which designated part is designated to be displayed on a display section; and
performing display control to cause the display section to display a part of the electronic document on the basis of the distribution of the marked places analyzed by the step of analyzing the distribution of the marked places, the part ranging differently from the designated part, so as to increase possibility of the marked places being displayed on the display section.

17. A program for operating an electronic document processing device as recited in any one of Claims 1 through 14, wherein the program causes a computer to function as the means.

18. A computer-readable recording medium storing a program as recited in Claim 17.

F I G. 1

Electronic document display device 100

- Setting storage section 101
- Marker information storage section 102
- Document data storage section 104
- Marker information read section 103
- Document data read section 105
- Document rendering section 106
- Display control section 107
- Plotting section 108
- Display section 111
- Input receiving section 109
- Input section 112
- Marker analysis section 110

F I G. 2

Document Data Read Processing

```
                    ┌──────────────┐
                    │    START     │
                    └──────────────┘
                           │
       ┌───────────────────────────────────────┐
       │                                        │ S201
       │        Reading Document Data           │
       │                                        │
       └───────────────────────────────────────┘
                           │
       ┌───────────────────────────────────────┐
       │                                        │ S202
       │          Rendering Document            │
       │                                        │
       └───────────────────────────────────────┘
                           │
       ┌───────────────────────────────────────┐
       │                                        │ S203
       │        Reading marker information      │
       │                                        │
       └───────────────────────────────────────┘
                           │
                    ◇─────────────◇  S204
              ◇                       ◇         NO
          ◇         Any marker?          ◇──────────┐
              ◇                       ◇            │
                    ◇─────────────◇               │
                          YES                      │
       ┌───────────────────────────────────────┐  │
       │                                        │ S205
       │      Analyzing distribution of markers │  │
       │                                        │  │
       └───────────────────────────────────────┘  │
                           │                       │
       ┌───────────────────────────────────────┐  │
       │                                        │ S206
       │   Generating display image with marker │  │
       │                                        │  │
       └───────────────────────────────────────┘  │
                           │◄──────────────────────┘
       ┌───────────────────────────────────────┐
       │                                        │ S207
       │        Generating display image        │
       │                                        │
       └───────────────────────────────────────┘
                           │
                    ┌──────────────┐
                    │     END      │
                    └──────────────┘
```

FIG. 3

303H

303h

301

302

F I G. 4

F I G. 5

Marker distribution analysis

```
                        ( START )
                            │
     ┌──────────────────────┼
     │                      ▼
     │        ┌────────────────────────────┐ ┌S501
     │        │ Searching for next marked  │
     │        │         location           │
     │        └────────────────────────────┘
     │                      │
     │                      ▼
     │                  ╱───────╲  ┌S502              NO
     │                 ╱  Is next ╲──────────────────────┐
     │          ◁─────  location   ─────────             │
     │                 ╲  found?  ╱                       │
     │                  ╲───────╱                         │
     │                      │ YES                         │
     │                      ▼                             │
     │                  ╱───────╲  ┌S503          NO      │
     │                 ╱ Has the ╲────────────────┐       │
     │          ◁─────  section   ─────────       │       │
     │                 ╲ shifted?╱                │       │
     │                  ╲───────╱                 │       │
     │                      │ YES                 │       │
     │                      ▼                     │       │
     │        ┌────────────────────────────┐ ┌S504│       │
     │        │ Conclude the number of     │     │       │
     │        │ markers in the previous    │     │       │
     │        │        section             │     │       │
     │        └────────────────────────────┘     │       │
     │                      │ ◁──────────────────┘       │
     │                      ▼                             │
     │        ┌────────────────────────────┐ ┌S505        │
     │        │ Adding the number of       │             │
     │        │         markers            │             │
     │        └────────────────────────────┘             │
     └──────────────────────┘                            │
                            ┌───────────────────────────┘
                            ▼
              ┌────────────────────────────┐ ┌S506
              │ Concluding the number of   │
              │ markers in sections where  │
              │ the number of markers has  │
              │ not been determined        │
              └────────────────────────────┘
                            │
                            ▼
                        ( END )
```

FIG. 6

| Section | The number of markers |
|---|---|
| 0~ 5 % | 0 |
| 5~ 10 % | 2 |
| 10~ 15 % | 0 |
| 15~ 20 % | 3 |
| 20~ 25 % | 1 |
| ⋮ | |
| 90~ 95 % | 3 |
| 95~100 % | 1 |

601 602

FIG. 7

F I G. 8

Marker distribution analysis

```
                    ( START )
                        │
                        ▼
        ┌───────────────────────────────┐
        │ Searching for next marked location │ ─S701
        └───────────────────────────────┘
                        │
                        ▼
              ╱───────────────────╲            NO
             ⟨ Is next marked location found? ⟩ ──────→
              ╲───────────────────╱  S702
                        │ YES
                        ▼
              ╱───────────────────╲            NO
             ⟨  Is marked location in block? ⟩ ──────→
              ╲───────────────────╱  S703
                        │ YES
         YES            ▼
      ←──────── ╱───────────────────╲
               ⟨   Are blocks continued?   ⟩  S704
                ╲───────────────────╱
                        │ NO
                        ▼
        ┌───────────────────────────────┐
        │   Storing the end of the block    │ ─S705
        └───────────────────────────────┘
                        │
                        ▼
        ┌───────────────────────────────┐
        │   Storing the top of the block    │ ─S706
        └───────────────────────────────┘
                        │
                        ▼
        ┌───────────────────────────────┐
        │    Adding the number of markers   │ ─S707
        └───────────────────────────────┘
                        │
                        ▼
        ┌───────────────────────────────┐
        │      Updating the last marker     │ ─S708
        └───────────────────────────────┘
                        │
                        ▼
        ┌───────────────────────────────┐
        │  Storing the end of the lastly    │ ─S709
        │         added block               │
        └───────────────────────────────┘
                        │
                        ▼
                    (  END  )
```

F I G.   9

805

801

804

802

803

A user can skim a document with enhanced visibility by decreasing a moving amount by a scrolling operation with respect to a place where many makers are added, and by increasing the moving amount by the scrolling operation with respect to a place where a few makers are added. Accordingly, in a case where a user uses electronic document data, for example, as a learning material, the user can effectively review the electronic document data.

The visibility can be further enhanced by a method for indicating the markers on the movable control, such as a slide bar, in which the color of the slide bar is changed in accordance with the number of the markers. The change in color of the slide bar is such that a place where many makers are added is indicated with deep color, and a place where a few markers are added is indicated with light color.

EP 2 487 568 A1

F I G. 1 0

901

905

904

902

903

906

907

908

It is helpful to use marker distribution in the jumping movement operation with the use of markers. A user finds markers added intensively to one place less important when skimming a document. Since a user wants to recognize blocks including markers and the vicinity thereof, it is effective in a jumping operation to jump to collective markers rather than to each marker.

In a jumping operation to jump to in an electronic document, different from the jumping operation to jump to each marker, an effective moving operation is possible by correcting the jumping operation so as to jump to the head of the collective markers as much as possible.

909w

909P

909W

F I G. 1 1

Scrolling operation of user

START

Calculating document data moving amount ⌐S1001

Calculating the numbers of markers ⌐S1002

Correcting the moving amount ⌐S1003

Plotting image after moving ⌐S1004

END

F I G. 1 2

Jumping processing

( START )

Calculating document data
moving amount — S1101

Should the displayed
part be corrected? — S1102 — NO

YES

Searching for peripheral marker block — S1103

Is a block found? — S1104 — NO

YES

Correcting a jump-target location — S1105

Plotting image after moving — S1106

( END )

FIG. 13

| 1201 | 1202 | 1203 | 1204 | 1205 |
|---|---|---|---|---|
| Block start location | Block end location | The number of markers | Distance to the last block | Distance to the next block |
| 6 % | 7 % | 2 | N/A | 11 % |
| 18 % | 21 % | 4 | 11 % | 20 % |
| 41 % | 46 % | 1 | 20 % | 15 % |
| . . . | | | | |
| 80 % | 83 % | 3 | 4 % | 12 % |
| 95 % | 96 % | 1 | 12 % | N/A |

F I G. 1 4

(a)

1301

1302 1303 1306

(b)

1304 1301 1305

1302 1303 1306

(c)

1304 1301 1305

1302 1303 1306

F I G. 1 5

1401

1405

1404

> It is helpful to use marker distribution in the jumping movement operation with the use of markers. A user finds markers added intensively to one place less important when skimming a document. Since a user wants to recognize blocks including markers and the vicinity thereof, it is effective in a jumping operation to jump to collective markers rather than to each marker.
>
> In a jumping operation to jump to in an electronic document, different from the jumping operation to jump to each marker, an effective moving operation is possible by correcting the jumping operation so as to jump to the head of the collective markers as much as possible.

1408

1402

1409P

1403

1409w

1409W

F I G. 1 6

(a)

| Section | The number of markers | Normalized value |
|---------|------------------------|------------------|
| $A_1$ | 0 | 0 |
| $A_2$ | 0 | 0 |
| $A_3$ | 4 (MAX) | 1 |
| $A_4$ | 2 | 0.5 |
| $A_5$ | 1 | 0.25 |
| $A_6$ | 0 | 0 |
| . . . | | |
| $A_{M-1}$ | 3 | 0.75 |
| $A_M$ | 1 | 0.25 |

(b)

F I G.  1 7

<table>
<tr><td colspan="2" align="center">**INTERNATIONAL SEARCH REPORT**</td><td colspan="2">International application No.<br><br>PCT/JP2010/067384</td></tr>
<tr><td colspan="4">A. CLASSIFICATION OF SUBJECT MATTER<br>*G06F3/048*(2006.01)i, *G06F17/30*(2006.01)i<br><br><br>According to International Patent Classification (IPC) or to both national classification and IPC</td></tr>
<tr><td colspan="4">B. FIELDS SEARCHED</td></tr>
<tr><td colspan="4">Minimum documentation searched (classification system followed by classification symbols)<br>G06F3/048, G06F17/30<br><br></td></tr>
<tr><td colspan="4">Documentation searched other than minimum documentation to the extent that such documents are included in the fields searched<br>   Jitsuyo Shinan Koho       1922–1996   Jitsuyo Shinan Toroku Koho   1996–2010<br>   Kokai Jitsuyo Shinan Koho   1971–2010   Toroku Jitsuyo Shinan Koho   1994–2010</td></tr>
<tr><td colspan="4">Electronic data base consulted during the international search (name of data base and, where practicable, search terms used)<br><br><br></td></tr>
<tr><td colspan="4">C. DOCUMENTS CONSIDERED TO BE RELEVANT</td></tr>
<tr><td align="center">Category*</td><td colspan="2" align="center">Citation of document, with indication, where appropriate, of the relevant passages</td><td align="center">Relevant to claim No.</td></tr>
<tr><td align="center">Y<br>A</td><td colspan="2">JP 8-147138 A  (Taito Corp.),<br>07 June 1996 (07.06.1996),<br>paragraphs [0012] to [0013]<br>(Family: none)</td><td align="center">1,11-18<br>2-10</td></tr>
<tr><td align="center">Y<br>A</td><td colspan="2">JP 2005-322046 A  (Toshiba Corp.),<br>17 November 2005 (17.11.2005),<br>paragraphs [0116] to [0188]<br>(Family: none)</td><td align="center">1,11-18<br>2-10</td></tr>
<tr><td colspan="4"> </td></tr>
<tr><td colspan="2">☐  Further documents are listed in the continuation of Box C.</td><td colspan="2">☐  See patent family annex.</td></tr>
<tr><td colspan="2">*    Special categories of cited documents:<br>"A"  document defining the general state of the art which is not considered<br>     to be of particular relevance<br>"E"  earlier application or patent but published on or after the international<br>     filing date<br>"L"  document which may throw doubts on priority claim(s) or which is<br>     cited to establish the publication date of another citation or other<br>     special reason (as specified)<br>"O"  document referring to an oral disclosure, use, exhibition or other means<br>"P"  document published prior to the international filing date but later than<br>     the priority date claimed</td><td colspan="2">"T"  later document published after the international filing date or priority<br>     date and not in conflict with the application but cited to understand<br>     the principle or theory underlying the invention<br>"X"  document of particular relevance; the claimed invention cannot be<br>     considered novel or cannot be considered to involve an inventive<br>     step when the document is taken alone<br>"Y"  document of particular relevance; the claimed invention cannot be<br>     considered to involve an inventive step when the document is<br>     combined with one or more other such documents, such combination<br>     being obvious to a person skilled in the art<br>"&"  document member of the same patent family</td></tr>
<tr><td colspan="2">Date of the actual completion of the international search<br>   24 December, 2010 (24.12.10)</td><td colspan="2">Date of mailing of the international search report<br>   11 January, 2011 (11.01.11)</td></tr>
<tr><td colspan="2">Name and mailing address of the ISA/<br>   Japanese Patent Office<br><br><br>Facsimile No.</td><td colspan="2">Authorized officer<br><br><br>Telephone No.</td></tr>
</table>

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8249124 A
- JP 7044352 A
- JP 2008046869 A